(19) Europäisches Patentamt / European Patent Office / Office européen des brevets

(11) **EP 2 522 841 B1**

(12) **EUROPEAN PATENT SPECIFICATION**

(45) Date of publication and mention
of the grant of the patent:
**30.05.2018 Bulletin 2018/22**

(21) Application number: **11826155.1**

(22) Date of filing: **04.02.2011**

(51) Int Cl.:
*F02D 41/38* (2006.01)     *F02D 41/04* (2006.01)
*F02D 41/40* (2006.01)     *F02D 45/00* (2006.01)

(86) International application number:
**PCT/JP2011/052363**

(87) International publication number:
**WO 2012/105038 (09.08.2012 Gazette 2012/32)**

(54) **FUEL INJECTION CONTROL DEVICE FOR INTERNAL-COMBUSTION ENGINE**

KRAFTSTOFFEINSPRITZSTEUERVORRICHTUNG FÜR EINEN VERBRENNUNGSMOTOR

DISPOSITIF DE COMMANDE D'INJECTION DE CARBURANT POUR MOTEUR A COMBUSTION INTERNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**14.11.2012 Bulletin 2012/46**

(73) Proprietor: **TOYOTA JIDOSHA KABUSHIKI KAISHA**
**Toyota-shi, Aichi-ken, 471-8571 (JP)**

(72) Inventor: **HASEGAWA, Ryo**
**Toyota-shi, Aichi-ken 471-8571 (JP)**

(74) Representative: **TBK**
**Bavariaring 4-6**
**80336 München (DE)**

(56) References cited:
WO-A1-2009/139184     WO-A1-2010/140263
JP-A- 1 216 015       JP-A- H1 182 139
JP-A- 11 082 139      JP-A- 2005 155 603
JP-A- 2006 299 955    JP-A- 2007 077 920
JP-A- 2008 101 591    JP-A- 2009 002 177
JP-A- 2009 121 444    JP-A- 2009 156 153
JP-A- 2009 156 153    JP-A- 2009 299 490
JP-A- 2010 112 335    JP-A- 2010 180 761
JP-A- 2010 180 761

• Yoshihiro Hotta ET AL: "Achieving Lower Exhaust Emissions and Better Performance in an HSDI Diesel Engine with Multiple Injection", R&D Review of Toyota CRDL (Vol.37, No.3), Sept. 2002, 1 September 2002 (2002-09-01), pages 9-16, XP055272659, Retrieved from the Internet: URL:http://www.tytlabs.com/english/review/rev373epdf/e373_009hotta.pdf [retrieved on 2016-05-13]

**Description**

[Technical Field]

The present invention relates to a fuel injection control apparatus of a compression self-ignition internal combustion engine represented by a diesel engine. Specifically, the present invention relates to an improvement for appropriately setting a no-injection period (hereinafter referred to as an "interval") between the main injection and the auxiliary injection executed prior thereto.

[Background Art]

Combustion of a diesel engine mounted in an automobile or the like is known to be mainly executed in the form of premixed combustion and diffusion combustion. Specifically, when a fuel injection from an injector into a combustion chamber is started, first, a combustible air-fuel mixture is generated due to evaporative diffusion of fuel (an ignition delay period). Next, this combustible air-fuel mixture undergoes self-ignition nearly simultaneously at several locations in the combustion chamber, and combustion progresses rapidly (premixed combustion). A fuel injection is continued, or a fuel injection is performed after a predetermined interval (a fuel injection suspending period; a no-injection period) into the combustion chamber whose temperature has been sufficiently increased by this premixed combustion, thereby executing diffusion combustion. Thereafter, since unburnt fuel is still present after the fuel injection is terminated, heat generation continues for a while (an afterburning period).

Recently, due to enforcement of tougher automobile exhaust emissions regulations (for example, Euro 6), improving exhaust emissions by achieving appropriate fuel injection timing is required even in situations where the pressure, temperature, heat transfer conditions, and the like in a combustion chamber change due to environmental changes, operation transients, etc.

Conventional techniques for achieving appropriate fuel injection timing are proposed in Patent Literature 1 to 3.

Patent Literature 1 discloses calculating a nondimensional interval by dividing the injection interval from a pilot injection to a main injection by the pressure pulsation cycle, obtaining the correction amount for the injection time corresponding to this nondimensional interval based on a correction map, and thereby deciding a final main injection time. With this, an appropriate injection amount for the main injection is achieved.

Also, Patent Literature 2 discloses a technique in which in the case where the upper limit of the amount of PM (particulate matter) generated is exceeded by a pilot injection time determined according to the engine operation state, the pilot injection is executed at another injection time.

Furthermore, Patent Literature 3 discloses a technique in which in the case where the engine is in an unstable state during leaning of an injection amount for each cylinder, learning is performed under stable conditions by changing the interval. Patent Literature 4 discloses that, when fuel spray by main injection overlaps with a flame or combustion gas remaining in a combustion chamber by pilot injection performed in advance, fuel is burnt in the state of lacking oxygen, so that the discharge of smoke increases. In order to avoid this, a fuel injection control device is provided with a control means for controlling to shift pilot injection timing. In case two or more fuel spray by main injection are formed, pilot injection timing is controlled taking account of swirling speed so that either one of two fuel spray by main injection does not overlap with flame or the like of pilot injection. The flame or the like by pilot injection is therefore formed previously at an intermediate part between two fuel spray of main injection.

[Citation List]

[Patent Literature]

[PTL 1] JP 2003-314337A
[PTL 2] JP 2004-360572A
[PTL 3] JP 2004-19539A
[PTL 4] JP H11-82139

[Disclosure of Invention]

[Technical Problems]

However, actually, none of the techniques disclosed in the patent literature stated above enables setting an interval that is optimal for reducing smoke generated due to combustion within the combustion chamber and also with which stable combustion within the combustion chamber can be realized.

For example, with the techniques disclosed in Patent Literature 1 and 3, the interval to be set is not an optimal interval for reducing the amount of smoke generated. Also, with the technique disclosed in Patent Literature 2, the interval is set merely to suppress the amount of PM generated to the upper limit or less, the ignition of the fuel injected in the main injection is not taken into account, and thus depending on the case, fuel injected in the main injection may cause accidental fire.

The inventor of the present invention noted that there is a correlation between the length of the interval described above (a time interval between the pilot injection end time and the main injection start time, or an interval of the rotation angle of the crankshaft) and the amount of smoke generated, and that the correlation differs between a region where the interval is short and a region where the interval is long. Then, the inventor noted that in order to reduce the amount of smoke generated and stabilize combustion, it is necessary to use different methods of setting the interval for the case where the interval is set in a region where the interval is relatively short, and the case where the interval is set in a region where the interval is relatively long, and arrived at the present invention.

The present invention has been achieved in view of the above-described problems, and an object thereof is to provide a fuel injection control apparatus of an internal combustion engine that is capable of sufficiently reducing the amount of smoke generated while achieving favorable ignition of fuel injected in the main injection.

[Means for Solving the Problems]

- Principles of Solution -

According to the principles of solution of the present invention for achieving the above-described object, a first region where an interval up to a main injection is short and a second region where the interval is long are set, and with respect to the injection time of the auxiliary injection (pilot injection), in a case where the injection time of auxiliary injection is set within the first region, the injection time of the auxiliary injection is determined based on an ignition delay period of fuel injected in the main injection, whereas in a case where the injection time of the auxiliary injection is set within the second region, the injection time of the auxiliary injection is determined based on an amount of overlap between spray injected in an auxiliary injection and spray injected in a main injection performed after that auxiliary injection.

- Solving Means -

Specifically, the present invention assumes a fuel injection control apparatus of a compression self-ignition internal combustion engine capable of executing, as fuel injection performed from a fuel injection valve toward the inside of a combustion chamber, at least main injection and auxiliary injection that is performed prior to the main injection. The fuel injection control apparatus of an internal combustion engine includes an auxiliary injection time control means.

The auxiliary injection time control means determines, in a case where the injection time of the auxiliary injection is in a first region whose range is on an angle of delay side of a predetermined injection time, as a target auxiliary injection time, an injection time of the auxiliary injection at which an ignition delay period of fuel injected in the main injection is within a preset allowable ignition delay range and also the ignition delay period is the longest, and determines, in a case where the injection time of the auxiliary injection is in a second region whose range is on an angle of advance side of the first region, as the target auxiliary injection time, an injection time of the auxiliary injection at which the ignition delay period of fuel injected in the main injection is within the preset allowable ignition delay range and also an amount of overlap between a spray of fuel injected in the auxiliary injection and a spray of fuel injected in the main injection is the smallest.

With this specific configuration, if the injection time of the auxiliary injection is in the first region, an injection time of the auxiliary injection at which the ignition delay period of fuel injected in the main injection is within the preset allowable ignition delay range, and the ignition delay period is the longest is determined as the target auxiliary injection time. This is because if the injection time of the auxiliary injection is in the first region, the amount of smoke generated due to combustion within the combustion chamber greatly fluctuates depending on the ignition delay period of fuel injected in the main injection, and there is a tendency that the longer the ignition delay period, the smaller the amount of smoke generated. In contrast, if the injection time of the auxiliary injection is in the second region, an injection time of the auxiliary injection at which the ignition delay period of fuel injected in the main injection is within the preset allowable ignition delay range, and also the amount of overlap between a spray of fuel injected in the auxiliary injection and a spray of fuel injected in the main injection is the smallest is determined as the target auxiliary injection time. This is because if the injection time of the auxiliary injection is in the second region, the amount of smoke generated due to combustion within the combustion chamber greatly fluctuates depending on the amount of overlap between a spray of fuel injected in the auxiliary injection and a spray of fuel injected in the main injection, and there is a tendency that the smaller the overlap amount, the smaller the amount of smoke generated.

In this manner, with the solving means of the present invention, the target auxiliary injection time is determined using different methods in the case of a region where the amount of smoke generated is greatly influenced by the ignition delay period of fuel injected in the main injection (the first region) and in the case of a region where the amount of smoke generated is greatly influenced by the amount of overlap between a spray injected in the auxiliary injection and a spray injected in the main injection (the second region). In this manner, it becomes possible to determine the target auxiliary injection time using methods appropriate for the regions, which enables performing stable combustion by adjusting the ignition delay period of fuel injected in the main injection to be within an allowable ignition delay range, and suppressing the amount of smoke generated to a minimum.

Specifically, whether the injection time of the auxiliary injection is in the first region or the second region is determined as described below.

First, in accordance with a load and a rotation speed of the internal combustion engine, a region of a low load and a low rotation speed serves as the first region and a region of a high load and a high rotation speed serves as the second region.

Also, in accordance with a degree of premixing of fuel injected in the auxiliary injection in a period after execution of the auxiliary injection until start of the main injection, a range of an injection period of the auxiliary injection in which the degree of premixing is less than a predetermined amount serves as the first region, and the range of the injection period of the auxiliary injection in which the degree of premixing is greater than or equal to the predetermined amount serves as the second region.

Also, the injection time of the auxiliary injection is changed during steady operation or deceleration of the internal combustion engine, an ignition delay period when the main injection is executed at each changed injection time is obtained, and whether the injection time of the auxiliary injection is in the first region or the second region is determined based on the obtained ignition delay period.

Particularly, in the case where the region determination is performed while changing the injection time of the auxiliary injection during steady operation or deceleration of the internal combustion engine, behavior of the internal combustion engine accompanying execution of the region determination operation can be suppressed, and thus it is possible to perform determination of the injection time of the auxiliary injection (determination of the first region or the second region) without giving the vehicle driver an unpleasant feeling.

Specifically, for the auxiliary injection time control means, the configurations described below may be adopted

Firstly, a configuration may be adopted in which the auxiliary injection time control means is configured to, in the case where the injection time of the auxiliary injection is in the first region, determine the target auxiliary injection time while shifting, by an amount corresponding to a single fluctuation cycle of the ignition delay period, the injection time of the auxiliary injection to the angle of delay side from an injection time of the auxiliary injection at which the ignition delay period is the longest among injection times of the auxiliary injection at which the ignition delay period of fuel injected in the main injection is within the preset allowable ignition delay range.

Also, a configuration may be adopted in which the auxiliary injection time control means is configured to, in the case where the injection time of the auxiliary injection is in the second region, determine the target auxiliary injection time while shifting, by an amount corresponding to a single fluctuation cycle of the amount of overlap between a spray of fuel injected in the auxiliary injection and a spray of fuel injected in the main injection, the injection time of the auxiliary injection to the angle of delay side from an injection time of the auxiliary injection at which the ignition delay period is the longest among injection times of the auxiliary injection at which the ignition delay period of fuel injected in the main injection is within the preset allowable ignition delay range.

In the case where the target auxiliary injection time is determined while shifting the injection time of the auxiliary injection to the angle of delay side by an amount corresponding to a single cycle (a single fluctuation cycle of the ignition delay period, or a single fluctuation cycle of the spray overlap amount), the time required for the operation of determining the target auxiliary injection time can be shortened. Particularly, in the case where the target auxiliary injection time is determined during steady operation or deceleration of the internal combustion engine, the operation of determining the target auxiliary injection time can be completed within a limited time (a period of time during which the vehicle is in a steady operation or deceleration state).

Also, a configuration may be adopted in which the auxiliary injection time control means is configured to, in a case where the injection time of the auxiliary injection is in the first region, obtain an ignition delay period while changing the injection time of the auxiliary injection to the angle of delay side, and in a case where that ignition delay period departs from within the allowable ignition delay range to a side in which the ignition delay period increases, determine, as the target auxiliary injection time, an injection time of the auxiliary injection at which the ignition delay period falls within the allowable ignition delay range after the departing.

In this manner, it is possible to further stabilize combustion of fuel injected in the main injection.

[Effects of the Invention]

In the present invention, the target auxiliary injection time in the case of a region where the amount of smoke generated is greatly influenced by the ignition delay period of fuel injected in the main injection and the target auxiliary injection time in the case of a region where the amount of smoke generated is greatly influenced by the amount of overlap between a spray of fuel injected in the auxiliary injection and a spray of fuel injected in the main injection are determined using different methods. In this manner, it becomes possible to determine the target auxiliary injection time using methods appropriate for the regions, which enables performing stable combustion by adjusting the ignition delay period of fuel injected in the main injection to be within an allowable ignition delay range, and suppressing the amount of smoke generated to a minimum.

[Brief Description of Drawings]

[FIG. 1]

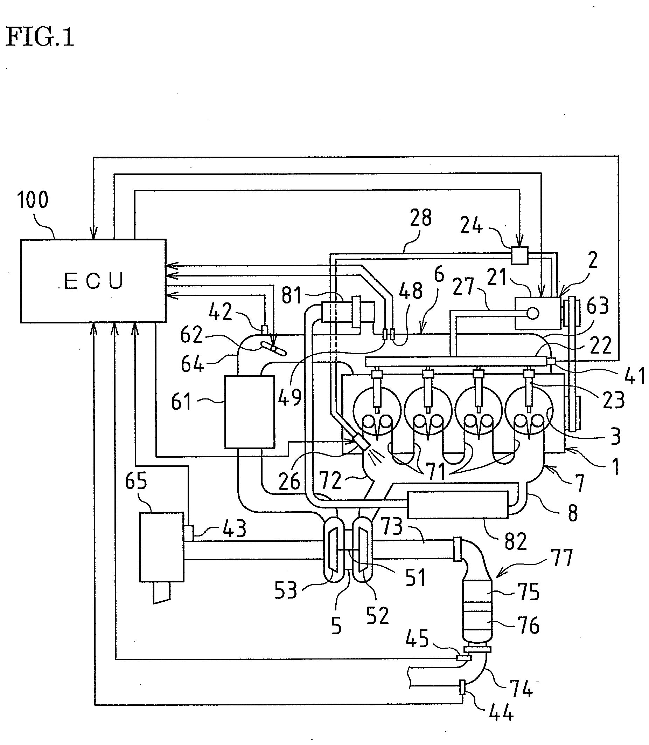

FIG. 1 is a schematic configuration diagram of an engine and a control system of the engine according to an embodiment.
[FIG. 2]

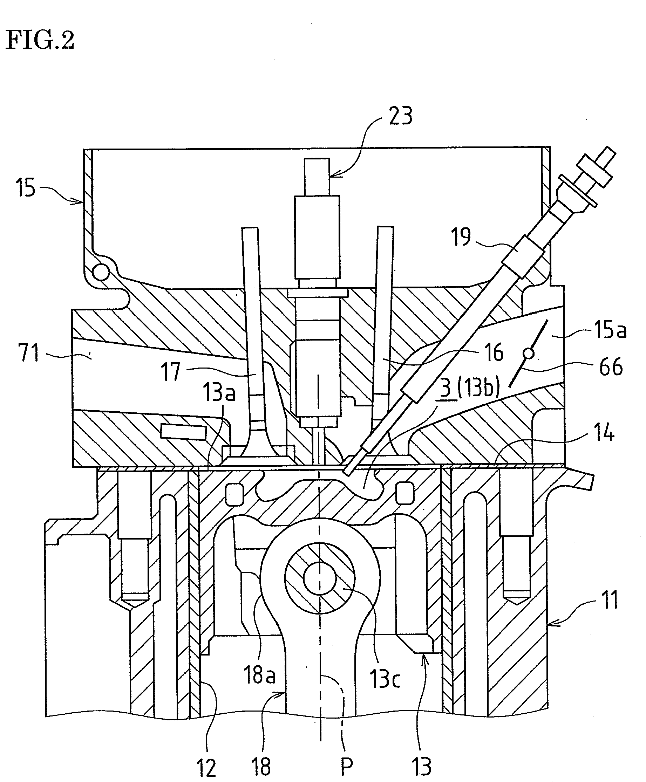

FIG. 2 is a cross-sectional diagram showing a combustion chamber of a diesel engine and its surroundings.
[FIG. 3]

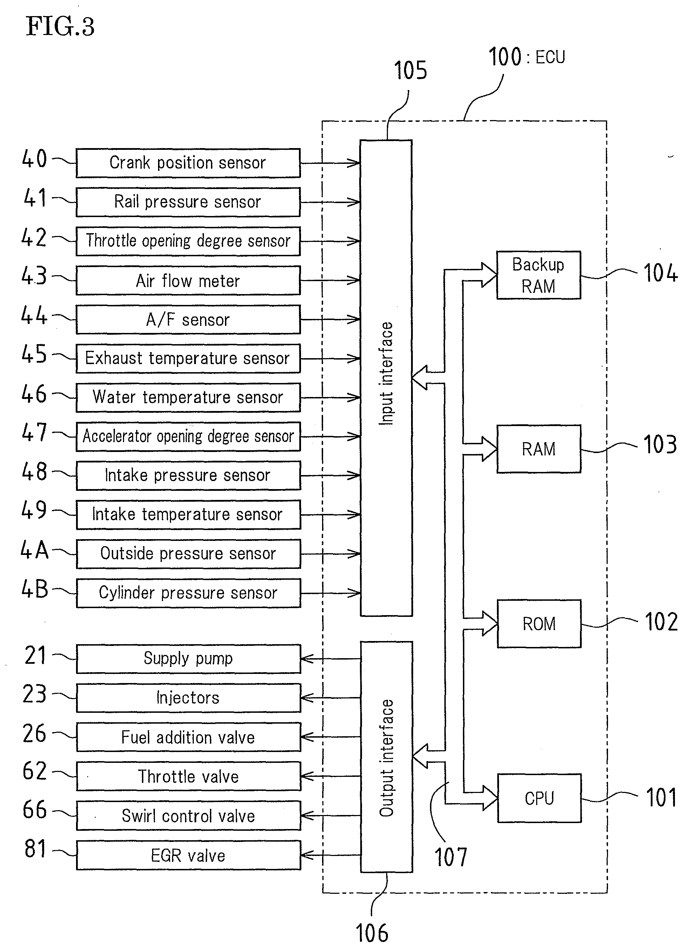

FIG. 3 is a block diagram illustrating a configuration of a control system such as an ECU.
[FIG. 4]

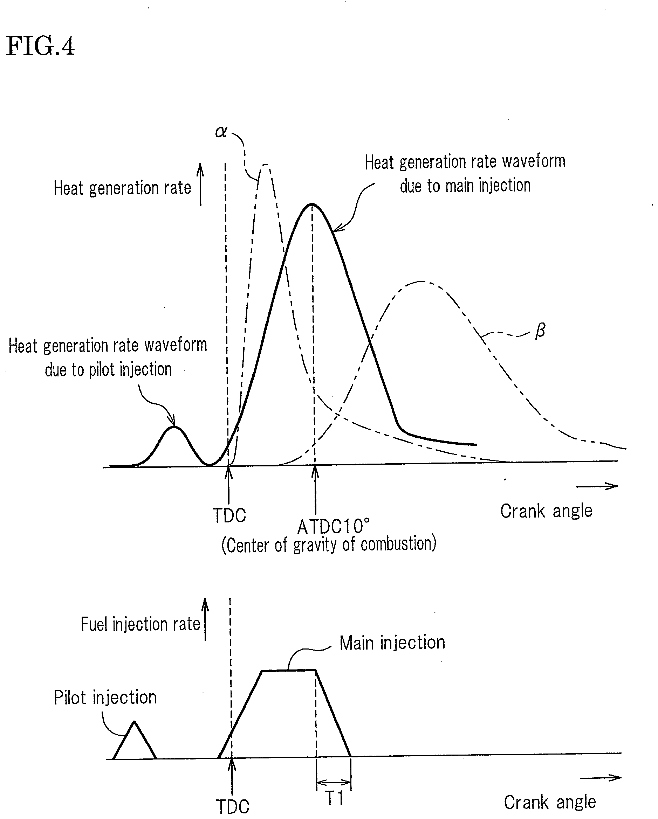

FIG. 4 shows waveform diagrams respectively showing an example of a change in the heat generation rate during combustion stroke (amount of heat generation per unit crankshaft rotation angle) and an example of a change in the fuel injection rate (fuel injection amount per unit crankshaft rotation angle).
[FIG. 5]

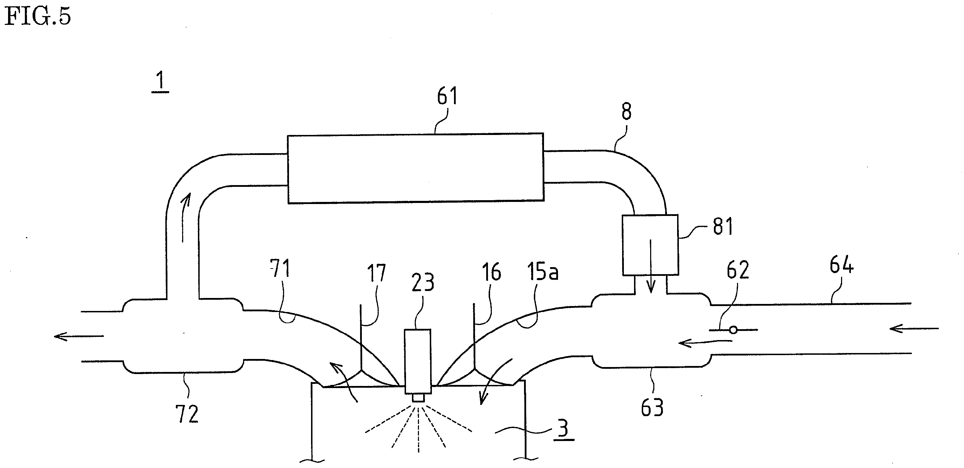

FIG. 5 is a schematic diagram of intake and exhaust systems and the combustion chamber for illustrating the outline of the combustion forms within the combustion chamber.
[FIG. 6]

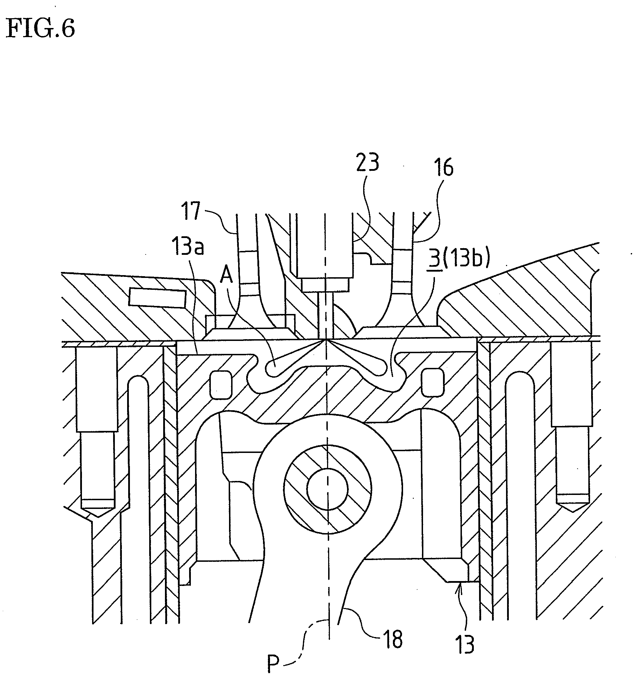

FIG. 6 is a cross-sectional view showing the combustion chamber and its surroundings at the time of fuel injection.
[FIG. 7]

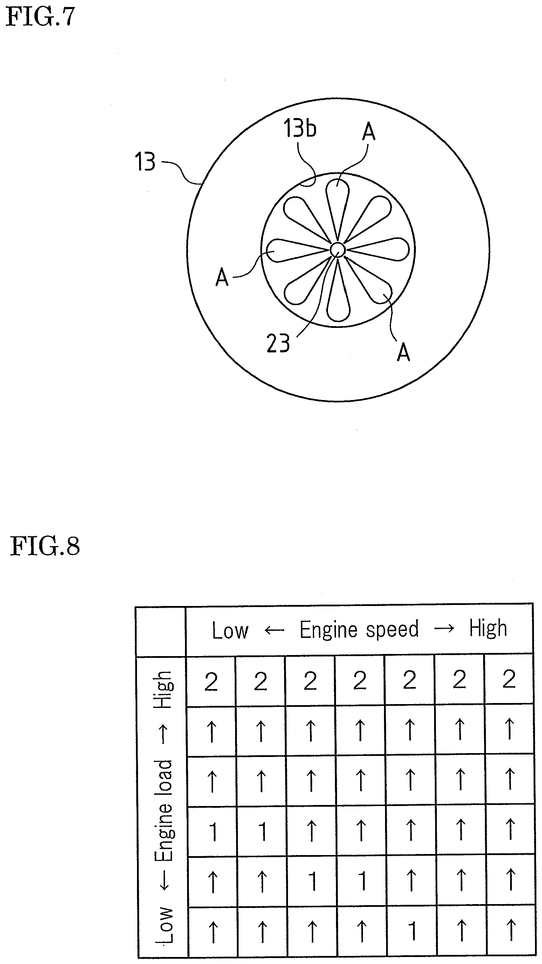

FIG. 7 is a plan view of the combustion chamber at the time of fuel injection.
[FIG. 8]
FIG. 8 shows a pilot injection region determination map for determining a pilot injection region according to an engine load and an engine speed.
[FIG. 9]

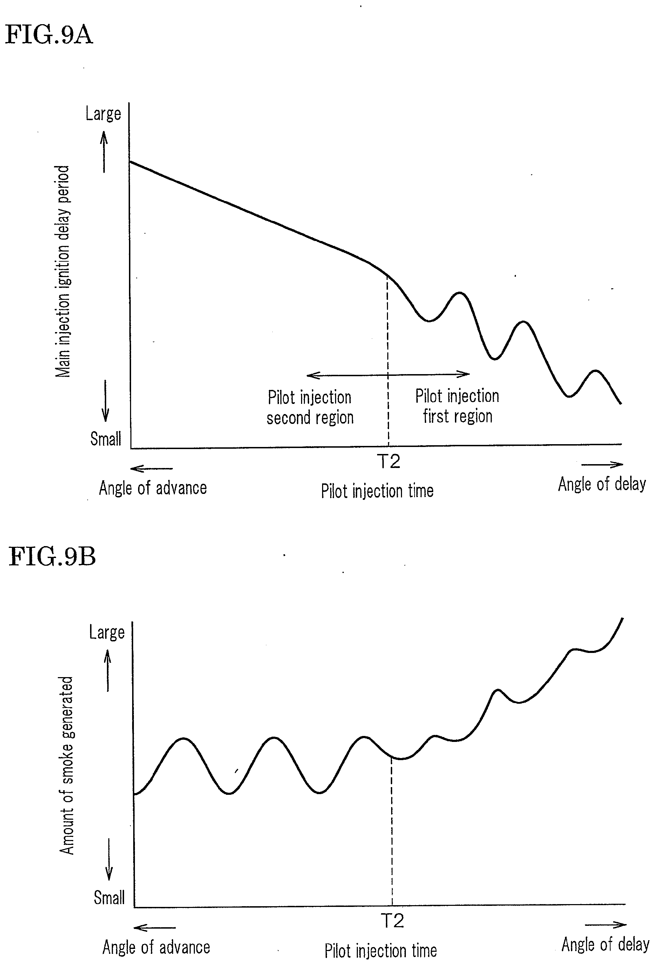

FIG. 9A shows an example of the relation between the injection time of the pilot injection and the ignition delay period of fuel injected in the main injection, and FIG. 9B shows an example of a change in the amount of smoke generated according to the injection time of the pilot injection.
[FIG. 10]

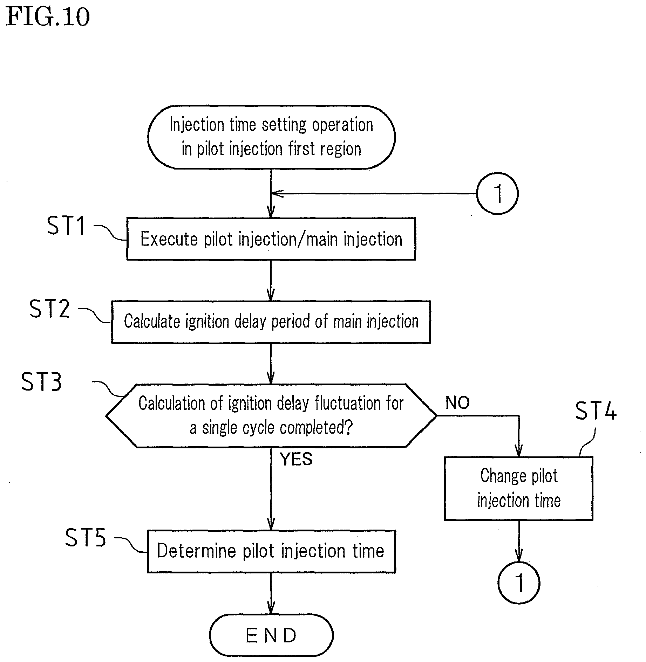

FIG. 10 is a flowchart illustrating a procedure of an operation of setting the pilot injection time in a pilot injection first region.
[FIG. 11]

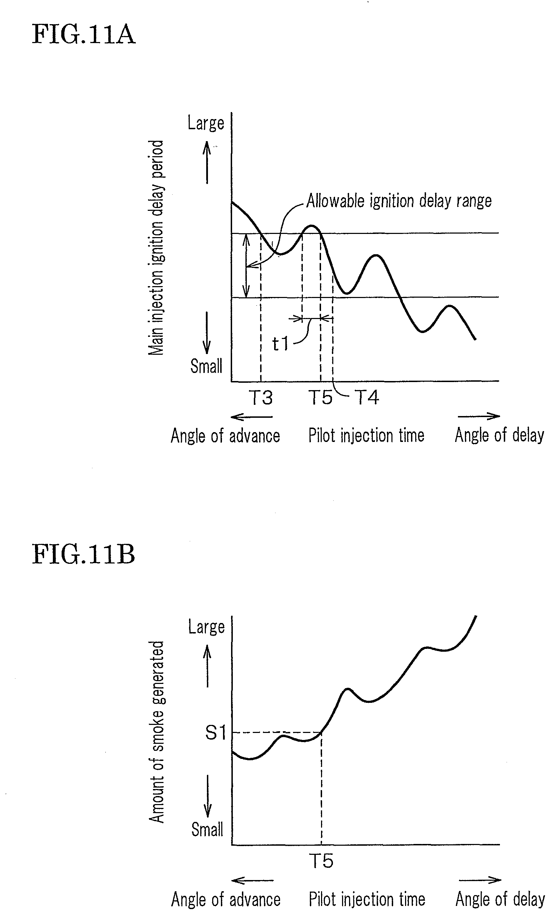

FIG. 11A shows an example of the relation between the injection time of the pilot injection in the pilot injection first region and the ignition delay period of fuel injected in the main injection, and FIG. 11B shows an example of a change in the amount of smoke generated according to the injection time of the pilot injection in the pilot injection first region.
[FIG. 12]

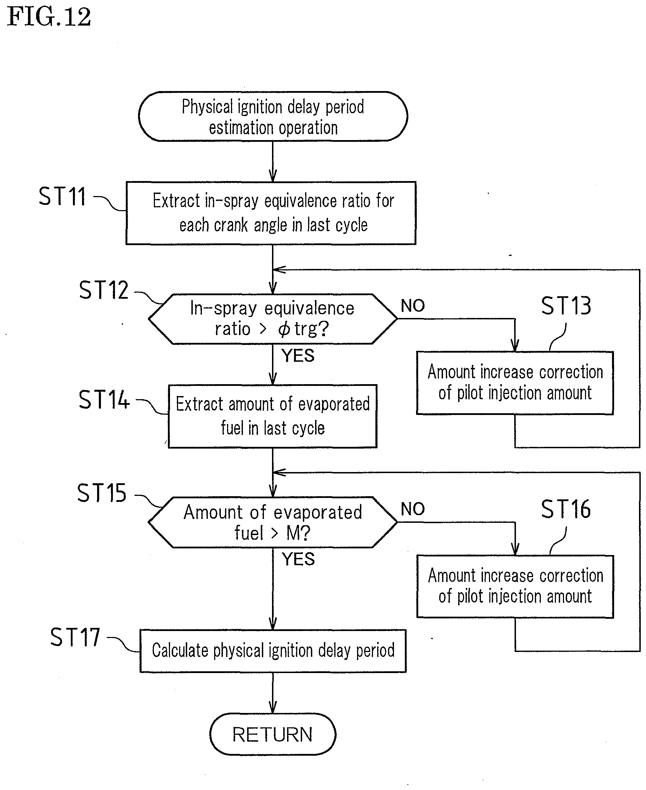

FIG. 12 is a flowchart illustrating a procedure of an operation of estimating physical ignition delay period.
[FIG. 13]

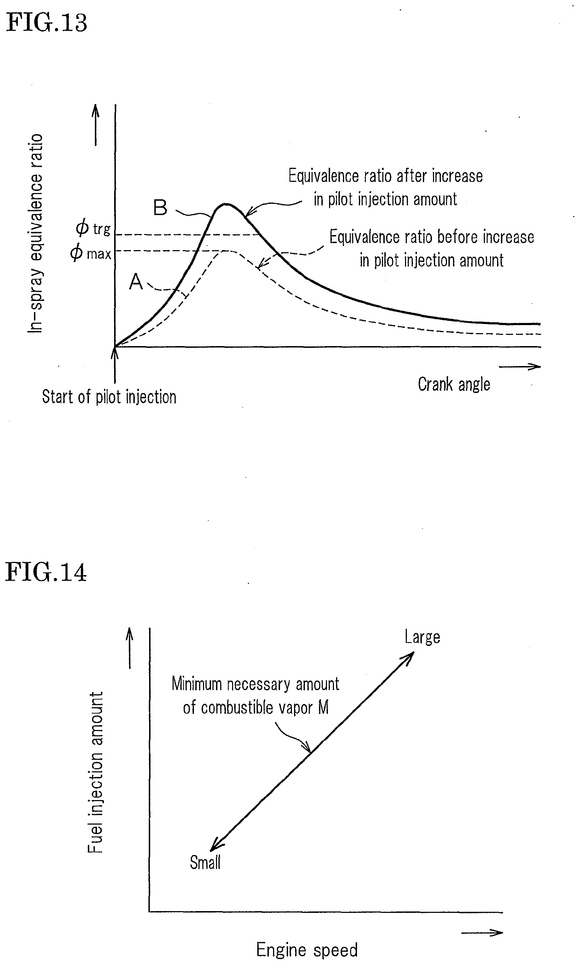

FIG. 13 is a diagram illustrating a change in an in-spray equivalence ratio after the start of pilot injection.
[FIG. 14]
FIG. 14 is a diagram illustrating a map of minimum necessary amount of combustible vapor for obtaining a minimum necessary amount of combustible vapor.
[FIG. 15]

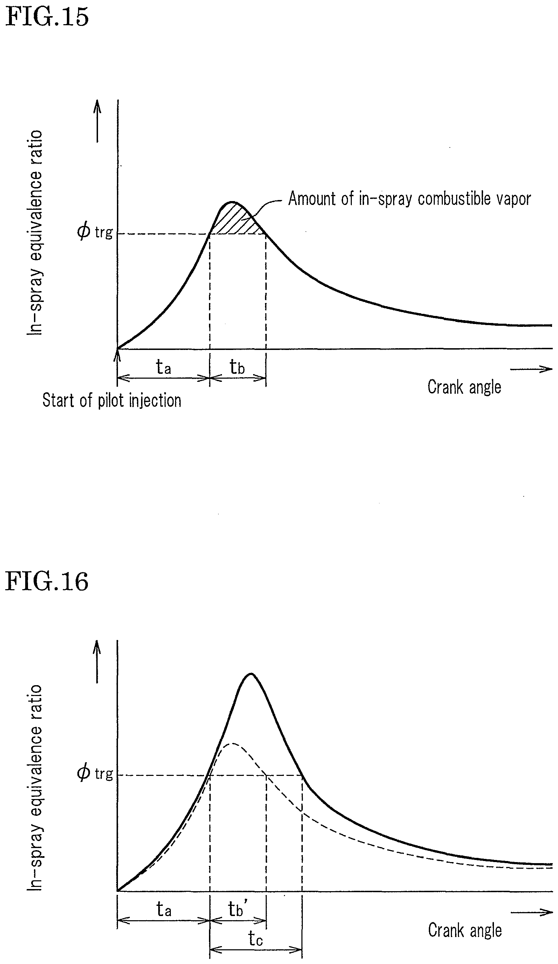

FIG. 15 is a diagram illustrating a period after the start of pilot injection during which a combustible equivalence ratio is secured and the amount of evaporated fuel.

[FIG. 16]

FIG. 16 shows a change in the in-spray equivalence ratio after the start of pilot injection, and shows a change in the in-spray equivalence ratio before the pilot injection amount has been increased and a change in the in-spray equivalence ratio after the pilot injection amount has been increased.

[FIG. 17]

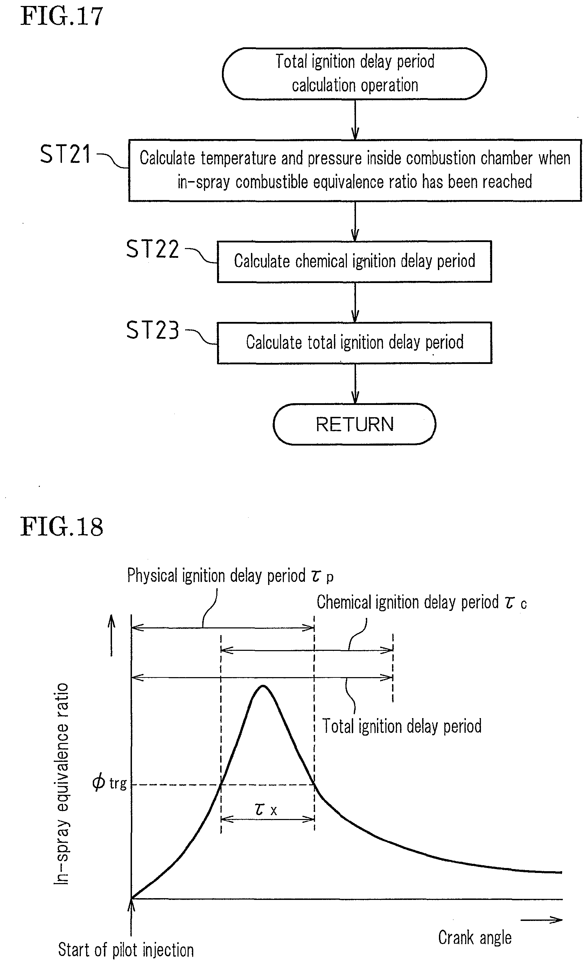

FIG. 17 is a flowchart illustrating a procedure of an operation of estimating chemical ignition delay period and an operation of calculating total ignition delay period.

[FIG. 18]

FIG. 18 is a diagram illustrating the physical ignition delay period and the chemical ignition delay period after the start of pilot injection.

[FIG. 19]

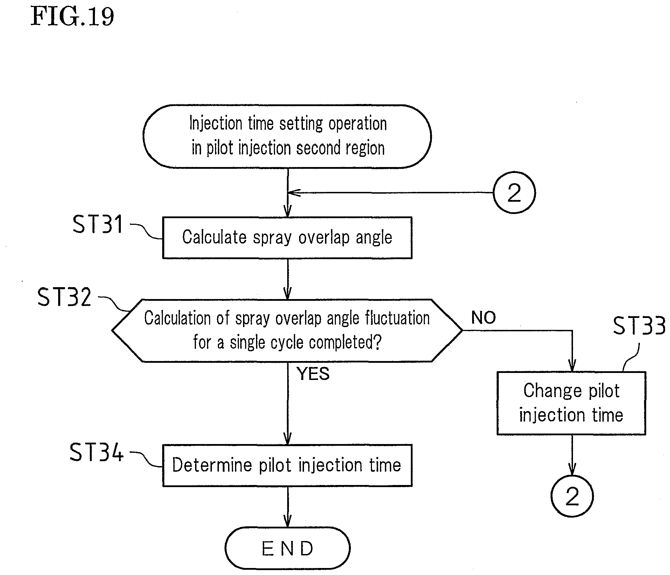

FIG. 19 is a flowchart illustrating a procedure of an operation of setting a pilot injection time in a pilot injection second region.

[FIG. 20]

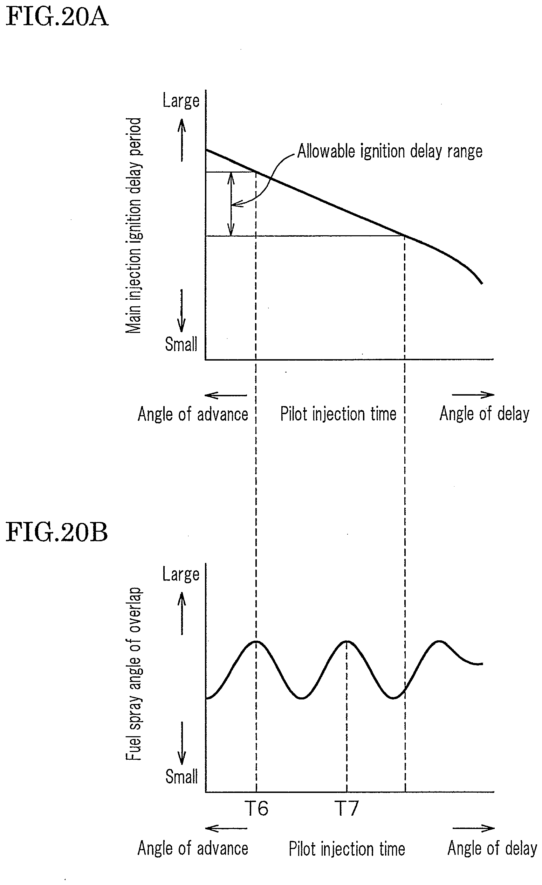

FIG. 20A is a diagram illustrating an example of the relation between an injection time of the pilot injection in the pilot injection second region and an ignition delay period of fuel injected in the main injection, and FIG. 20B is a diagram illustrating an example of a change in the spray overlap angle according to the injection time of the pilot injection in the pilot injection second region.

[FIG. 21]

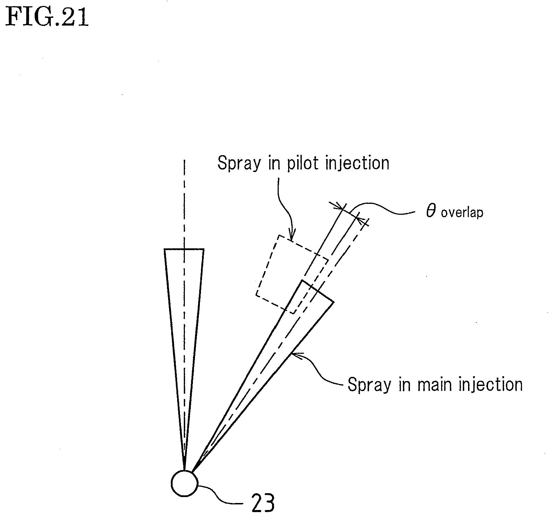

FIG. 21 is a schematic diagram of sprays for illustrating a region where a spray injected in the pilot injection and a spray injected in the main injection overlap each other.

[Mode for Carrying Out the Invention]

Embodiments of the invention are described below with reference to the drawings. In these embodiments, a case will be described in which the present invention is applied to a common rail in-cylinder direct injection multi-cylinder (for example, inline four-cylinder) diesel engine (compression self-ignition internal combustion engine) mounted in an automobile.

- Engine configuration -

First, the overall configuration of a diesel engine (hereinafter simply referred to as the engine) according to the present embodiment will be described. FIG. 1 is a schematic configuration diagram of an engine 1 and a control system of the engine 1 according to the present embodiment. Also, FIG. 2 is a cross-sectional diagram showing combustion chambers 3 of the diesel engine and their surroundings.

As shown in FIG. 1, the engine 1 according to the present embodiment is configured as a diesel engine system having a fuel supply system 2, the combustion chambers 3, an intake system 6, an exhaust system 7, and the like as its main portions.

The fuel supply system 2 is configured including a supply pump 21, a common rail 22, injectors (fuel injection valves) 23, a cutoff valve 24, a fuel addition valve 26, an engine fuel path 27, an added fuel path 28, and the like.

The supply pump 21 draws fuel from a fuel tank, and after putting the drawn fuel under high pressure, supplies the fuel to the common rail 22 via the engine fuel path 27. The common rail 22 has the functionality of an accumulation chamber in which the high pressure fuel supplied from the supply pump 21 is held (accumulated) at a predetermined pressure, and this accumulated fuel is distributed to the injectors 23. The injectors 23 are configured from piezo injectors within which a piezoelectric element (piezo element) is provided, and supply fuel by injection into the combustion chambers 3 by appropriately opening a valve. Details of the control of fuel injection from the injectors 23 will be described later.

Also, the supply pump 21 supplies part of the fuel drawn from the fuel tank to the fuel addition valve 26 via the added fuel path 28. In the added fuel path 28, the cutoff valve 24 is provided in order to stop fuel addition by cutting off the added fuel path 28 during an emergency.

The fuel addition valve 26 is configured from an electronically controlled opening/closing valve whose valve opening period is controlled by an addition control operation performed by an ECU 100, such that the amount of fuel added to the exhaust system 7 becomes a target addition amount (an addition amount such that exhaust A/F becomes a target A/F), and such that a fuel addition timing becomes a predetermined timing. In other words, a desired amount of fuel is supplied from the fuel addition valve 26 by injection to the exhaust system 7 (to an exhaust manifold 72 from exhaust ports 71) in accordance with appropriate timing.

The intake system 6 is provided with an intake manifold 63 connected to an intake port 15a formed in a cylinder head 15 (see FIG. 2), and an intake pipe 64 that constitutes an intake path is connected to the intake manifold 63. Also, in this intake path, an air cleaner 65, an air flow meter 43, and a throttle valve (intake throttle valve) 62 are disposed in the stated order from the upstream side. The air flow meter 43 outputs an electrical signal according to the amount of air that flows into the intake path via the air cleaner 65.

Also, in the intake system 6, a swirl control valve 66 is provided in order to vary swirl flow (horizontal swirl flow) in the combustion chambers 3 (see FIG. 2). Specifically, each cylinder is provided with two ports, namely a normal port and a swirl port, as the intake port 15a, and the swirl control valve 66, which is constituted by a butterfly valve whose opening degree is adjustable, is disposed in the normal port 15a shown in FIG. 2. The swirl control valve 66 is linked to an actuator (not shown), and the flow rate of air passing through the normal port 15a can be changed according to the opening degree of the swirl control valve 66, which is adjusted by driving of the actuator. The greater the opening degree of the swirl control valve 66, the greater the amount of air that flows from the normal port 15a into the cylinder. For this reason, swirl generated by the swirl port (not shown in FIG. 2) becomes relatively weak, and a low swirl condition (a condition in which the swirl velocity is low) is achieved in the cylinder. On the contrary, the smaller the opening degree of the swirl control valve 66, the lower the amount of air that flows from the normal port 15a into the cylinder. For this reason, swirl generated by the swirl port becomes relatively strong, and a high swirl condition (a condition in which the swirl velocity is high) is achieved in the cylinder.

The exhaust system 7 is provided with the exhaust manifold 72 connected to the exhaust ports 71 formed in the cylinder head 15, and exhaust pipes 73 and 74 that constitute an exhaust path are connected to the exhaust manifold 72. Also, in this exhaust path, a maniverter (exhaust purification apparatus) 77 is disposed that is provided with a NOx storage catalyst (NSR catalyst: NOx Storage Reduction catalyst) 75 and a DPNR catalyst (Diesel Particulate-NOx Reduction catalyst) 76. The following describes the NSR catalyst 75 and the DPNR catalyst 76.

The NSR catalyst 75 is a storage reduction NOx catalyst and is composed using, for example, alumina ($Al_2O_3$) as a support, with, for example, an alkali metal such as potassium (K), sodium (Na), lithium (Li), or cesium (Cs), an alkaline earth element such as barium (Ba) or calcium (Ca), a rare earth element such as lanthanum (La) or yttrium (Y), and a precious metal such as platinum (Pt) supported on this support.

In a state in which a large amount of oxygen is present in exhaust gas, the NSR catalyst 75 stores NOx, and in a state in which the oxygen concentration in exhaust gas is low, and furthermore a large amount of reduction component (e.g., an unburned component of fuel (HC)) is present, the NSR catalyst 75 reduces NOx to $NO_2$ or NO and releases the resulting $NO_2$ or NO. NOx that has been released as $NO_2$ or NO is further reduced due to quickly reacting with HC or CO in exhaust gas and becomes $N_2$. Also, by reducing $NO_2$ or NO, HC and CO themselves are oxidized and thus become $H_2O$ and $CO_2$. In other words, by suitably adjusting the oxygen concentration or the HC component in exhaust gas introduced into the NSR catalyst 75, it is possible to purify HC, CO, and NOx in the exhaust gas. In the configuration of the present embodiment, adjustment of the oxygen concentration or the HC component in exhaust gas can be performed with an operation for adding fuel from the fuel addition valve 26.

On the other hand, in the DPNR catalyst 76, a NOx storage reduction catalyst is supported on a porous ceramic structure, for example, and PM in exhaust gas is captured while passing through a porous wall. When the air-fuel ratio of the exhaust gas is lean, NOx in the exhaust gas is stored in the NOx storage reduction catalyst, and when the air-fuel ratio is rich, the stored NOx is reduced and released. Furthermore, a catalyst that oxidizes/burns the captured PM (e.g., an oxidization catalyst whose main component is a precious metal such as platinum) is supported on the DPNR catalyst 76.

The following describes the combustion chamber 3 of the diesel engine and its surroundings with reference to FIG. 2. As shown in FIG. 2, in a cylinder block 11 that constitutes part of the engine, a cylindrical cylinder bore 12 is formed in each cylinder (each of four cylinders), and a piston 13 is housed within each cylinder bore 12 such that the piston 13 can slide vertically.

The combustion chamber 3 is formed on the top side of a top face 13a of the piston 13. In other words, the combustion chamber 3 is defined by a lower face of the cylinder head 15 installed on top of the cylinder block 11 via a gasket 14, an inner wall face of the cylinder bore 12, and the top face 13a of the piston 13. A cavity (recess) 13b is provided in substantially the center of the top face 13a of the piston 13, and this cavity 13b also constitutes part of the combustion chamber 3.

Note that the cavity 13b is shaped such that the dimensions of the recess are small in the center portion (on a cylinder centerline P) and increase toward the outer peripheral side. In other words, when the piston 13 is near compression top dead center as shown in FIG. 2, the space in the combustion chamber 3 formed by the cavity 13b is small with a relatively low volume in the center portion, and gradually increases toward to the outer peripheral side (becomes large).

A small end 18a of a connecting rod 18 is linked to the piston 13 by a piston pin 13c, and a large end of the connecting rod 18 is linked to a crankshaft that is an engine output shaft. Thus, reciprocating movement of the piston 13 within the cylinder bore 12 is transmitted to the crankshaft via the connecting rod 18, and engine output is obtained due to rotation of this crankshaft. Also, a glow plug 19 is disposed facing the combustion chamber 3. The glow plug 19 glows due to the flow of electrical current immediately before the engine 1 is started, and functions as a starting assistance apparatus whereby ignition and combustion are promoted due to part of a fuel spray being blown onto the glow plug.

Disposed in the cylinder head 15 are the intake port 15a that introduces air into the combustion chamber 3 and the exhaust port 71 that discharges exhaust gas from the combustion chamber 3, as well as an intake valve 16 that opens/closes the intake port 15a and an exhaust valve 17 that opens/closes the exhaust port 71. The intake valve 16 and the exhaust valve 17 are disposed facing each other on either side of the cylinder centerline P. That is, this engine 1 is configured as a cross flow-type engine. Also, the injector 23 that injects fuel directly into the combustion chamber 3 is installed in the cylinder head 15. The injector 23 is disposed substantially in the center above the combustion chamber 3, in an erect orientation along the cylinder centerline P, and injects fuel introduced from the common rail 22 toward the combustion chamber 3 in accordance with a predetermined timing.

Furthermore, as shown in FIG. 1, the engine 1 is provided with a turbocharger 5. This turbocharger 5 is provided with a turbine wheel 52 and a compressor wheel 53 that are linked via a turbine shaft 51. The compressor wheel 53 is disposed facing the inside of the intake pipe 64, and the turbine wheel 52 is disposed facing the inside of the exhaust pipe 73. Thus the turbocharger 5 uses exhaust flow (exhaust pressure) received by the turbine wheel 52 to rotate the compressor wheel 53, thereby performing a so-called supercharging operation that increases the intake pressure. In the present embodiment, the turbocharger 5 is a variable nozzle-type turbocharger, in which a variable nozzle vane mechanism (not shown) is provided on the turbine wheel 52 side, and by adjusting the opening degree of this variable nozzle vane mechanism it is possible to adjust the supercharging pressure of the engine 1.

An intercooler 61 for forcibly cooling intake air heated due to supercharging with the turbocharger 5 is provided in the intake pipe 64 of the intake system 6.

The throttle valve 62 provided on the downstream side from the intercooler 61 is an electronically controlled opening/closing valve whose opening degree can be steplessly adjusted, and has a function of constricting the area of the channel of intake air under a predetermined condition, and thus adjust (reduce) the amount of intake air supplied.

Also, the engine 1 is provided with an exhaust gas recirculation path (EGR path) 8 that connects the intake system 6 and the exhaust system 7. The EGR path 8 reduces the combustion temperature by appropriately directing part of the exhaust gas back to the intake system 6 and resupplying that exhaust gas to the combustion chamber 3, thus reducing the amount of NOx generated. Also, provided in the EGR path 8 are an EGR valve 81 that by being opened/closed steplessly under electronic control is capable of freely adjusting the flow rate of exhaust gas that flows through the EGR path 8, and an EGR cooler 82 for cooling exhaust that passes through (recirculates through) the EGR path 8. The EGR apparatus (exhaust gas recirculation apparatus) is constituted by the EGR path 8, the EGR valve 81, the EGR cooler 82, and the like.

- Sensors -

Various sensors are installed at respective sites of the engine 1, and these sensors output signals related to environmental conditions at the respective sites and the operating state of the engine 1.

For example, the air flow meter 43 outputs a detection signal according to the flow rate of intake air (the amount of intake air) on the upstream side of the throttle valve 62 within the intake system 6. An intake temperature sensor 49 is disposed in the intake manifold 63 and outputs a detection signal according to the temperature of intake air. An intake pressure sensor 48 is disposed in the intake manifold 63 and outputs a detection signal according to the intake air pressure. An A/F (air-fuel ratio) sensor 44 outputs a detection signal that changes in a continuous manner according to the oxygen concentration in exhaust gas on the downstream side of the maniverter 77 of the exhaust system 7. An exhaust temperature sensor 45 likewise outputs a detection signal according to the temperature of exhaust gas (exhaust temperature) on the downstream side of the maniverter 77 of the exhaust system 7. A rail pressure sensor 41 outputs a detection signal according to the pressure of fuel accumulated in the common rail 22. A throttle opening degree sensor 42 detects the opening degree of the throttle valve 62.

-ECU-

As shown in FIG. 3, the ECU 100 is provided with a CPU 101, a ROM 102, a RAM 103, a backup RAM 104, and the like. Stored in the ROM 102 are various control programs, maps that are referenced when executing those various control programs, and the like. The CPU 101 executes various types of arithmetic processing based on the various control programs and maps stored in the ROM 102. The RAM 103 is a memory that temporarily stores data resulting from computation with the CPU 101 or data that has been input from the respective sensors. The backup RAM 104 is a nonvolatile memory that stores that data or the like to be saved when the engine 1 is stopped, for example.

The CPU 101, the ROM 102, the RAM 103, and the backup RAM 104 are connected to each other via a bus 107, and are connected to an input interface 105 and an output interface 106 via the bus 107.

The input interface 105 is connected to the rail pressure sensor 41, the throttle opening degree sensor 42, the air flow meter 43, the A/F sensor 44, the exhaust temperature sensor 45, the intake pressure sensor 48, and the intake temperature sensor 49. Furthermore, the input interface 105 is connected to a water temperature sensor 46 that outputs a detection signal according to the coolant temperature of the engine 1, an accelerator opening degree sensor 47 that outputs a detection signal according to the amount of accelerator pedal depression, a crank position sensor 40 that outputs a detection signal (pulse) each time the output shaft (crankshaft) of the engine 1 rotates a specific angle, an outside pressure sensor 4A that detects outside air pressure, and a cylinder pressure sensor 4B that detects pressure inside the cylinder, and the like.

On the other hand, the supply pump 21, the injector 23, the fuel addition valve 26, the throttle valve 62, the swirl control valve 66, the EGR valve 81 and the like are connected to the output interface 106. In addition, an actuator (not shown in the drawings) provided in the variable nozzle vane mechanism of the turbocharger 5 is connected to the output interface 106.

The ECU 100 executes various controls of the engine 1 based on outputs from the various sensors, calculated values obtained by arithmetic expressions that use the output values, or various maps stored in the ROM 102.

For example, the ECU 100 executes a pilot injection (auxiliary injection) and a main injection as a fuel injection control of the injector 23.

The pilot injection is an operation of injecting a small amount of fuel in advance, prior to the main injection from the injector 23. Also, the pilot injection is an injection operation for suppressing a fuel ignition delay by the main injection, thereby leading to a stable diffusion combustion, which is also referred to as an auxiliary injection. Also, the pilot injection of the present embodiment has, in addition to a function to suppress the initial combustion speed by the main injection, a preheating function to increase the internal temperature of the cylinder. That is, after executing the pilot injection, fuel injection is suspended, and the temperature of the compressed gas (the temperature in the cylinder) is sufficiently increased before the main injection is started such that the self-ignition temperature of the fuel (for example, 1000 K) is reached, thereby securing favorable ignition of fuel sprayed in the main injection.

The main injection is an injection operation for generating a torque to the engine 1 (operation for supplying fuel for generating torque). The fuel injection amount in this main injection is determined, basically, such that the required torque is obtained according to the operation states, such as the engine speed, the amount of accelerator operation, the coolant temperature, and the intake air temperature. For example, the greater the engine speed (the engine speed calculated based on the value detected by the crank position sensor 40) or the greater the amount of accelerator operation (the amount of accelerator pedal depression detected by the accelerator opening degree sensor 47) (i.e., the greater the accelerator opening degree), the greater the resulting torque requirement value of the engine 1. Accordingly, the fuel injection amount in the main injection is set to a larger amount. Also, in the case where the inside of the cylinder has been sufficiently heated in advance by the pilot injection, the fuel injected in the main injection is immediately exposed to a temperature environment of at least the self-ignition temperature so as to undergo thermal decomposition, such that combustion starts immediately after injection.

Note that other than the pilot injection and the main injection described above, an after-injection or a post-injection is executed as necessary. The after-injection is an injection operation for increasing the exhaust gas temperature. Specifically, the after-injection is executed at a timing at which majority of the combustion energy of supplied fuel is obtained as exhaust heat energy instead of being converted into a torque of the engine 1. Also, the post-injection is an injection operation for increasing the temperature of the maniverter 77 by directly introducing fuel into the exhaust system 7. For example, when the amount of PM captured by and deposited in the DPNR catalyst 76 has exceeded a specific amount (for example, indicated from detection of a before/after pressure difference of the maniverter 77), the post-injection is executed.

Also, the ECU 100 controls the opening degree of the EGR valve 81 according to the operation state of the engine 1, and adjusts the amount of exhaust gas recirculated towards the intake manifold 63 (EGR amount). This EGR amount is set according to an EGR map stored in advance in the ROM 102. Specifically, the EGR map is a map for determining the EGR amount (EGR rate) using the engine speed and the engine load as parameters. Note that this EGR map is created in advance through experimentation, simulation, or the like. In other words, the EGR amount (opening degree of the EGR valve 81) is obtained by applying, to the EGR map, the engine speed calculated based on the detection value from the crank position sensor 40 and the opening degree of the throttle valve 62 (corresponding to the engine load) detected by the throttle opening degree sensor 42.

The ECU 100 furthermore executes opening degree control on the swirl control valve 66. The opening degree control executed on the swirl control valve 66 is performed so as to change the amount of circumferential movement in a cylinder per unit time (or per unit of crank rotation angle) of a spray of fuel injected into the combustion chamber 3.

- Fuel injection pressure -

The fuel injection pressure when executing the fuel injection is determined based on the internal pressure of the common rail 22. In regard to the internal pressure of the common rail, normally, the higher the engine load and the greater the engine speed, the greater the target value for the pressure of fuel supplied from the common rail 22 to the injectors 23 (i.e., the target rail pressure). In other words, when the engine load is high, a large amount of air is drawn into the combustion chamber 3, making it necessary to inject a large amount of fuel into the combustion chamber 3 from the injectors 23, and therefore the pressure of injection from the injectors 23 needs to be high. Also, when the engine speed is high, the period during which injection is possible is short, making it necessary to inject a large amount of fuel per unit time, and therefore the pressure of injection from the injectors 23 needs to be high. In this way, the target rail pressure is normally set based on the engine load and the engine speed. Note that the target rail pressure is set in accordance with, for example, a fuel pressure setting map stored in the ROM 102. Specifically, the valve opening period (injection rate waveform) of the injectors 23 is controlled through determining the fuel pressure according to this fuel pressure setting map, thus enabling the amount of fuel injected during the valve opening period to be specified.

Note that in the present embodiment, the fuel pressure is adjusted between 30MPa and 200MPa according to the engine load or the like.

The optimal values of fuel injection parameters for the pilot injection, the main injections and the like differ depending on the temperature conditions of the engine 1, intake air, and the like.

For example, the ECU 100 adjusts the amount of fuel discharged by the supply pump 21 such that the common rail pressure is equal to the target rail pressure set based on the operation state of the engine, i.e., such that the fuel injection pressure matches the target injection pressure. Also, the ECU 100 determines the fuel injection amount and the fuel injection form based on the operation state of the engine. Specifically, the ECU 100 calculates an engine rotational speed based on the value detected by the crank position sensor 40, obtains the amount of accelerator pedal depression (accelerator opening degree) based on the value detected by the accelerator opening degree sensor 47, and determines the total fuel injection amount (a sum of injection amounts in the pilot injection and the main injection) based on the engine rotational speed and the accelerator opening degree.

Setting of target fuel pressure -

The following describes a method of setting the target fuel pressure described above. In the diesel engine 1, it is important to simultaneously satisfy demands such as improving exhaust emissions by decreasing the amount of NOx generated or amount of smoke generated, reducing combustion noise during combustion stroke, and ensuring sufficient engine torque. As a method of simultaneously satisfying such demands, it is effective to suitably control the state of change in heat generation rate within a cylinder during combustion stroke (state of change expressed by a heat generation rate waveform).

Among the waveforms shown in the upper portion in FIG. 4, the solid line shows an example heat generation rate waveform relating to combustion of fuel injected in the pilot injection and the main injection, the horizontal axis representing the crank angle, and the vertical axis representing the heat generation rate. In the figure, "TDC" indicates a crank angle position corresponding to the compression top dead center of the piston 13. Also, the waveforms shown in the lower portion of FIG. 4 show waveforms of the injection rate of fuel injected from the injector 23 (fuel injection amount per unit rotation angle of the crankshaft).

In the above heat generation rate waveform, for example, the combustion of fuel injected in the main injection is started near the compression top dead center of the piston 13 (TDC), the heat generation rate reaches a maximum value (peak value) at a specific piston position after the compression top dead center of the piston 13 (e.g., a point 10° after the compression top dead center (10° ATDC)), and furthermore the combustion of fuel injected in the main injection ends at another specific piston position after the compression top dead center (e.g., a point 25° after the compression top dead center (25° ATDC)). Executing the combustion of an air-fuel mixture in this state of change in heat generation rate creates a situation where the combustion of 50% of the air-fuel mixture present in a cylinder is complete at a point 10° after the compression top dead center (10° ATDC). In other words, the point 10° after the compression top dead center (10° ATDC) serving as the center of gravity of combustion, about 50% of the total amount of heat generated in an expansion stroke is generated by no later than 10° ATDC, and the engine 1 can be operated with high thermal efficiency.

Also, with respect to the relation between the crank angle and the fuel injection rate waveform when this center of gravity of combustion has been reached, the center of gravity of combustion is located in a period from a fuel injection stopping signal has been transmitted to the injector 23 until fuel injection is completely stopped (a period T1 in FIG. 4).

In the state where combustion according to such a heat generation rate waveform is performed, the inside of the cylinder is sufficiently heated in advance by pilot injection, and due to this preheating, fuel injected in the main injection is immediately exposed to a temperature environment higher than or equal to the self-ignition temperature to undergo thermal decomposition, such that combustion starts immediately after injection.

Also, the waveform indicated by a dashed double-dotted line $\alpha$ in FIG. 4 is a heat generation rate waveform obtained when the fuel injection pressure is set higher than an appropriate value. The combustion speed and the peak value of the heat generation rate are both excessively high, and there is concern regarding an increase in combustion noise and the amount of NOx generated. On the other hand, the waveform indicated by a dashed double-dotted line $\beta$ in FIG. 4 is a heat generation rate waveform obtained when the fuel injection pressure is set lower than the appropriate value. The combustion speed is low and the timing at which the peak of the heat generation rate appears is shifted toward the angle of delay side to a large extent, and there is concern that sufficient engine torque may not be attained.

- Brief description of combustion forms -

Next is a brief description of forms of combustion within the combustion chamber 3 of the engine 1 according to the present embodiment.

FIG. 5 schematically shows a state in which gas (air) is drawn into one of the cylinders of the engine 1 through the intake manifold 63 and the intake port 15a, combustion is performed by fuel injection from the injector 23 into the combustion chamber 3, and the combusted gas is discharged to the exhaust manifold 72 through the exhaust ports 71.

As shown in FIG. 5, gas drawn into the cylinder contains fresh air drawn in from the intake pipe 64 via the throttle valve 62, and EGR gas drawn in from the EGR path 8 when the aforementioned EGR valve 81 opens. The ratio of the amount (mass) of EGR gas to the sum of the amount (mass) of fresh air drawn in and the amount (mass) of EGR gas drawn in (that is, EGR rate) changes according to the opening degree of the EGR valve 81 that is appropriately controlled by the ECU 100 according to the operation state.

Fresh air and EGR gas drawn into the cylinder in this manner are drawn into the cylinder along with the lowering of the piston 13 (not shown in FIG. 5) via the intake valve 16 that opens in the intake stroke, and become in-cylinder gas. This in-cylinder gas is sealed in the cylinder as a result of the intake valve 16 being closed at a valve closure time that is determined according to the operation state of the engine 1 (achieving a state in which the in-cylinder gas is sealed), and thereafter, compressed in the compression stroke along with the rising of the piston 13. Then, when the piston 13 has reached near the top dead center, the injector 23 opens for a predetermined period of time through the above-described injection amount control performed by the ECU 100 such that fuel is directly injected into the combustion chamber 3. Specifically, the pilot injection is executed before the piston 13 reaches the top dead center, and after the fuel injection is suspended, the main injection is executed when the piston 13 has reached near the top dead center after a predetermined interval.

FIG. 6 is a cross-sectional view of the combustion chamber 3 and its surroundings at the time of this fuel injection. FIG. 7 is a plan view of the combustion chamber 3 (diagram showing the top face of the piston 13) at the time of this fuel injection. As shown in FIG. 7, eight nozzles are provided in the injector 23 of the engine 1 according to the present embodiment at equal intervals in the circumferential direction such that fuel is equally injected from these nozzles. Note that the number of the nozzles is not limited to eight.

Each spray A of fuel injected from the nozzles is diffused substantially conically. Also, since the fuel injection (the pilot injection or the main injection) from the nozzles is performed when the piston 13 has reached near the compression top dead center, each spray A of fuel is diffused in the cavity 13b, as shown in FIG. 6.

In this manner, each spray A of fuel injected from the nozzles formed in the injector 23 is mixed with the in-cylinder gas with the lapse of time so as to form an air-fuel mixture, which is diffused conically inside the cylinder, and undergoes combustion by self-ignition. That is, each fuel spray A forms a substantially conical combustion field with the in-cylinder gas, and combustion starts in each of the combustion fields (eight combustion fields in the present embodiment).

The energy generated by this combustion serves as kinetic energy for pushing down the piston 13 toward the bottom dead center (energy to serve as engine output), heat energy for increasing the temperature inside the combustion chamber 3, or heat energy radiated to the outside (for example, to the coolant) via the cylinder block 11 or the cylinder head 15.

The combusted in-cylinder gas is discharged to the exhaust ports 71 and the exhaust manifold 72 along with the rising of the piston 13 via the exhaust valve 17 that opens in the exhaust stroke.

- Interval adjusting operation -

Characteristics of the present embodiment lie in an operation of adjusting an interval, which is an interval between the end timing of the pilot injection and the start timing of the main injection (for example, an interval of the crankshaft rotation angle). This interval adjustment is performed mainly to perform stable combustion while adjusting the ignition delay period of fuel injected in the main injection to be within an allowable ignition delay range, and to suppress the amount of smoke generated to a minimum. Note that the interval adjusting operation described below is executed during steady operation or deceleration (for example, at the time of coast travel of the vehicle) of the engine 1, for example. A specific description of the interval adjusting operation will be provided below.

Pilot injection region

First, it is determined whether the current engine operation state is a state in which the injection time of the pilot injection should be set relatively on the angle of delay side to decrease the interval, or a state in which the injection time of the pilot injection should be set relatively on the angle of advance side to increase the interval. For example, the degree of advancement in premixing of fuel injected in the pilot injection is taken into account, and it is determined, using a preset value as the border, whether an injection pattern in which the pilot injection is executed on the angle of delay side of the border (injection pattern in which a relatively short interval is set), or an injection pattern in which the pilot injection is executed on the angle of advance side of the border (injection pattern in which a relatively long interval is set) should be employed.

More specifically, it is determined, when the injection timing of the main injection is set to the compression top dead center (TDC), whether the injection pattern to be employed is an injection pattern in which the pilot injection is executed in a range that is on the angle of delay side of a point 25° before the compression top dead center (BTDC 25°), or an injection pattern in which the pilot injection is executed in a range that is on the angle of advance side of the point 25° before the compression top dead center (BTDC 25°). The present invention is not limited to the values mentioned above, and appropriate values are set according to the degree of advancement in premixing of fuel injected in the pilot injection. In the description provided below, the pilot injection region of the former pattern (the case in which the pilot injection is executed in a range that is on the angle of delay side of the border) is referred to as a "pilot injection first region", and the pilot injection region of the latter pattern (the case in which the pilot injection is executed in a range that is on the angle of advance side of the border) is referred to as a "pilot injection second region".

Note that the border between the "pilot injection first region" and the "pilot injection second region" is not limited to a specific time, and a predetermined transition region may be interposed such that the angle of delay side of the transition region is set as the "pilot injection first region", and the angle of advance side of the transition region is set as the "pilot injection second region". For example, the range from a point 28° before the compression top dead center (BTDC 28°) to a point 18° before the compression top dead center (BTDC 18°) may be set as the transition region, such that the pilot injection region that is on the angle of delay side of the point 18° before the compression top dead center (BTDC 18°) is set as the "pilot injection first region" and the pilot injection region that is on the angle of advance side of the point 28° before the compression top dead center (BTDC 28°) is set as the "pilot injection second region". Also in this case, the present invention is not limited to the values mentioned above, and appropriate values are set according to the degree of advancement in premixing of fuel injected in the pilot injection.

Also, whether the execution timing of the pilot injection is set to a time in the pilot injection first region or the pilot injection second region is determined according to the engine load and the engine speed. FIG. 8 shows a pilot injection execution region determination map for determining the region where the pilot injection is to be executed according to the engine load and the engine speed. In this pilot injection execution region determination map, the "pilot injection first region" is selected in the operation state indicated by "1", and the "pilot injection second region" is selected in the operation state indicated by "2". As shown in this pilot injection execution region determination map, the pilot injection is executed in the pilot injection second region in the case where the engine load or the engine speed is relatively high, and otherwise (operation state in which both the engine load and the engine speed are relatively low), the pilot injection is executed in the pilot injection first region. That is, in the case where the engine load is relatively high, the fuel injection amount is large, and thus a long interval is set to achieve diffusion of fuel injected in the pilot injection, and in the case where the engine speed is relatively high, a period (time interval) from after execution of the pilot injection until execution of the main injection becomes short, and thus a long interval is set to achieve diffusion of fuel injected in the pilot injection (region determination operation by a region determination means).

Interval adjusting operation performed in each region

In the present embodiment, the interval adjusting operation performed in the case where the injection time of the pilot injection is set to a time in the pilot injection first region and the interval adjusting operation performed in the case where the injection time of pilot injection is set to a time in the pilot injection second region are executed using different methods.

The reason for this is as described below. In the case where the injection time of the pilot injection is set to a time in the pilot injection first region, the amount of smoke generated is greatly influenced by ignition delay in the main injection, whereas in the case where the injection time of the pilot injection is set to a time in the pilot injection second region, the amount of smoke generated is greatly influenced by the angle of overlap (overlap amount) between a spray (or flame) in the pilot injection and a spray in the main injection. Thus, the interval adjusting operation is performed using different methods for the respective cases.

More specifically, in the case where the injection time of the pilot injection is set relatively on the angle of delay side (the injection time is set within the pilot injection first region), that is, the amount of smoke generated is greatly influenced by the ignition delay in the main injection, the injection time of the pilot injection is changed within a preset allowable ignition delay range, and a timing at which the ignition delay period is the greatest within the allowable range is determined as the pilot injection time in the pilot injection first region (target pilot injection time; target auxiliary injection time) (target auxiliary injection time determination operation by an auxiliary injection time control means).

On the other hand, in the case where the injection time of the pilot injection is set relatively on the angle of advance side (the injection time is set within the pilot injection second region), that is, the amount of smoke generated is greatly influenced by the angle of overlap between a spray (or flame) in the pilot injection and a spray in the main injection, the injection time of the pilot injection is changed within the allowable ignition delay range, and a timing at which the angle of overlap between a spray (or flame) in the pilot injection and a spray in the main injection is the smallest (including the case where the angle of overlap is "0") is determined as the pilot injection time in the pilot injection second region (target pilot injection time; target auxiliary injection time) (target auxiliary injection time determination operation by an auxiliary injection time control means). A specific description of this will be provided below.

FIG. 9A shows an example of the relation between the injection time of the pilot injection and the ignition delay period of fuel injected in the main injection. Also, FIG. 9B shows an example of change in the amount of smoke generated (cyclic change; fluctuation in the amount of smoke generated) according to the injection time of the pilot injection.

As shown in FIG. 9A, in the case where the injection time of the pilot injection is on the angle of advance side of a predetermined time (timing T2 in FIG. 9A), that is, the interval up to the main injection is longer than a predetermined interval, as the injection time of the pilot injection is shifted to the angle of delay side, the ignition delay period of fuel injected in the main injection is reduced at a substantially constant rate.

In contrast, in the case where the injection time of the pilot injection is on the angle of delay side of the predetermined time (timing T2 in FIG. 9A), that is, the interval up to the main injection is shorter than the predetermined interval, the ignition delay period of fuel injected in the main injection cyclically changes along with change in the injection time of the pilot injection, and the center of the amplitude thereof becomes smaller (the ignition delay period becomes shorter) as the injection time of the pilot injection is shifted toward the angle of delay side.

Also, as shown in FIG. 9B, in the case where the injection time of the pilot injection is on the angle of advance side of the predetermined time (timing T2 in FIG. 9B), that is, the interval up to the main injection is longer than the predetermined interval, the amount of smoke generated cyclically changes according to change in the injection time of the pilot injection. The center of amplitude thereof is substantially the same.

In contrast, in the case where the injection time of the pilot injection is on the angle of delay side of the predetermined time (timing T2 in FIG, 9B), that is, the interval up to the main injection is shorter than the predetermined interval, the amount of smoke generated cyclically changes along with change in the injection time of the pilot injection, and the center of amplitude thereof becomes greater (the amount of smoke generated increases) as the injection time of the pilot injection is shifted toward the angle of delay side.

The reason why the amount of smoke generated changes according to the injection time of the pilot injection as described above will be described below.

First, there are three major factors that affect the amount of smoke generated.

(1) Main injection amount and injection pressure
(2) Amount of overlap between spray (or flame) in the pilot injection and spray in the main injection
(3) Ignition delay of fuel injected in the main injection

With respect to the relation between the factors listed above and the amount of smoke generated, the greater the main injection amount, the richer the equivalence ratio in the spray, and thus the amount of smoke generated tends to increase. Also, the lower the injection pressure, the more the diffusion of the spray is restricted, and thus the equivalence ratio in the spray becomes rich such that the amount of smoke generated tends to increase. Also, the greater the amount of overlap between a spray in the pilot injection and a spray in the main injection, the greater the region where the equivalence ratio is rich, and thus the amount of smoke generated tends to increase. Furthermore, the longer the ignition delay period of fuel injected in the main injection, the more diffusion of a spray in the pilot injection advances during that ignition delay period, and thus lack of oxygen in a spray is gradually solved such that the amount of smoke generated tends to decrease. Assuming the presence of fluctuation factors of the amount of smoke generated such as those described above, each of the interval adjusting operations performed in the pilot injection first region and the pilot injection second region will be described.

Interval adjusting operation performed in the pilot injection first region First, the interval adjusting operation performed in the pilot injection first region will be described. In the case where the injection time of the pilot injection is on the angle of delay side of the predetermined time, that is, the interval up to the main injection is shorter than the predetermined interval, among the three factors listed above, the "ignition delay of fuel injected in the main injection" has the greatest influence on the amount of smoke generated, and the degrees of influence of the "main injection amount and injection pressure" and the "amount of overlap between spray injected in the pilot injection and spray injected in the main injection" decrease in this order.

In this manner, in the case where the injection time of the pilot injection is set within the pilot injection first region, the amount of smoke generated is greatly influenced by the "ignition delay of fuel injected in the main injection" and fluctuates. Specifically, the greater the "ignition delay of fuel injected in the main injection", the smaller the amount of smoke generated. In the relation shown in FIG. 9A between the injection time of the pilot injection and the ignition delay period of fuel injected in the main injection, as the injection time of the pilot injection is shifted toward the angle of delay side, the "ignition delay period of fuel injected in the main injection" becomes shorter through a cyclic change. The reason for this cyclic change of the "ignition delay period of fuel injected in the main injection" is that the ignition delay period is influenced by changes in the above-listed factor (1), "main injection amount and injection pressure" and the factor (2), "amount of overlap between spray (or flame) injected in the pilot injection and spray injected in the main injection", in addition to change in the above-listed factor (3), "ignition delay of fuel injected in the main injection".

In this manner, along with decreasing of the "ignition delay period of fuel injected in the main injection" through a cyclic change, the amount of smoke generated increases through a cyclic change, as shown in FIG. 9B.

Based on this relation between the injection time of the pilot injection, the ignition delay period of fuel injected in the main injection and the amount of smoke generated, in the case where the injection time of the pilot injection is set within the pilot injection first region, the injection time of the pilot injection is determined such that the amount of smoke generated is the smallest, in accordance with the "ignition delay period of fuel injected in the main injection".

A specific description of an operational procedure for setting the pilot injection time in the case where the injection time of the pilot injection is set within the pilot injection first region will be provided below.

An outline of the operation performed when the pilot injection time is set in the pilot injection first region is as follows. While changing the injection time of the pilot injection within a preset allowable ignition delay range, the ignition delay period of fuel injected in the main injection is obtained for each injection time. Then, a pilot injection time at which the ignition delay period is the longest within the allowable ignition delay range is determined as the target pilot injection time. More specifically, as the target pilot injection time, a pilot injection time is determined at which the ignition delay period is the longest during a period that is, within the allowable ignition delay range, between a pilot injection time at which the ignition delay period is the longest and a pilot injection time at which the ignition delay period is the shortest, and during which the ignition delay period does not depart from the allowable ignition delay range.

FIG. 10 is a flowchart illustrating an operational procedure performed when the pilot injection time is set in the pilot injection first region. Also, FIG. 11A is a diagram showing an example of the relation between the injection time of the pilot injection and the ignition delay period of fuel injected in the main injection in the pilot injection first region, and FIG. 11B is a diagram showing an example of change in the amount of smoke generated in accordance with the injection time of the pilot injection in the pilot injection first region.

In this interval adjusting operation for the pilot injection first region, first, the pilot injection is executed at a pilot injection time at which ignition delay is the greatest within the allowable ignition delay range, and after that, the main injection is executed (for example, the main injection is executed at the compression top dead center (TDC)). This allowable ignition delay range is set in advance through experimentation, simulation, or the like. For example, with respect to the allowable ignition delay range, as the allowable limit on the greater ignition delay side, an ignition delay obtained by subtracting a preset period from an ignition delay with which accidental fire of fuel injected in the main injection occurs is set, and as the allowable limit on the smaller ignition delay side, an ignition delay set such that the amount of smoke generated is within a preset allowable range is set. Also, the allowable ignition delay range may be set, through experimentation, simulation, or the like, as a range where the amount of NOx in the exhaust gas, combustion noise and the like are all within allowable ranges preset therefor.

In FIG. 10, first, in step ST1, a pilot injection is executed at a pilot injection time at which ignition delay is the greatest within the allowable ignition delay range, and after that, a main injection is executed. Then, in step ST2, the ignition delay period of fuel injected in the main injection in this case is obtained. The ignition delay period may be obtained based on the ignition time of fuel injected in the main injection, which has been detected using a change in the cylinder pressure detected by the cylinder pressure sensor 4B provided in the combustion chamber 3, or, as described later, the ignition delay period may be obtained by calculating a physical ignition delay and a chemical ignition delay of fuel, and adding these delays.

After the ignition delay in of fuel injected in the main injection has been obtained, the procedure proceeds to step ST3, where it is determined whether calculation of ignition delay fluctuation for a single cycle has been completed. This ignition delay fluctuation for a single cycle refers to an ignition delay fluctuation for a single cycle, the ignition delay changing cyclically (fluctuation for a single cycle starting from an ignition delay obtained when the pilot injection is executed at a pilot injection time at which the ignition delay is the greatest within the allowable ignition delay range). In FIG. 11, the ignition delay fluctuation for a single cycle corresponds to the range between a timing T3 and a timing T4 in the allowable ignition delay range, and thus the ignition delay periods are obtained while changing the injection time of pilot injection within this range.

When the interval adjusting operation for the pilot injection first region is started, the ignition delay fluctuation for a single cycle has not been calculated yet, and thus, the determination result "NO" is obtained in step ST3, and the procedure proceeds to step ST4. In step ST4, the injection time of the pilot injection is changed. Specifically, the injection time of the pilot injection is changed by being shifted to the angle of delay side by the crank angle of 1° with respect to the injection time of the last-executed pilot injection (injection time of the pilot injection executed in step ST1), and the procedure returns to step ST1.

Then, when the next combustion stroke is started, in step ST1, the pilot injection is executed at the changed pilot injection time, and then, the main injection is executed. The execution time of the main injection of this time is the same as that in the last combustion stroke (the last routine). Then, in step ST2, ignition delay of fuel injected in the main injection at this time is obtained.

If calculation of the ignition delay fluctuation for a single cycle has been completed by repeating the operation described above, the determination result "YES" is obtained in step ST3, and the procedure proceeds to step ST5. In step ST5, the ignition delay periods of fuel injected in the main injections at the respective pilot injection times that were calculated in step ST2 are analyzed, and the injection time of the pilot injection is determined. Specifically, from among the ignition delay periods of fuel injected in the main injection at each of the pilot injection times that were calculated in step ST2, an injection time of the pilot injection at which the ignition delay is the greatest is extracted. Note that since the ignition delay period is cyclically changing as shown in FIG. 11A, the ignition delay period may temporarily depart from the allowable ignition delay range. In FIG. 11A, the ignition delay period falls outside the allowable ignition delay range during a period t1. In this case, from among the injection times of the pilot injection at which the ignition delay is within the allowable ignition delay range after the period t1, an injection time of the pilot injection at which the ignition delay period is the longest is extracted and determined as the target pilot injection time. In FIG. 11A, a timing T5 is decided as the target pilot injection time. In this manner, robustness is secured against accidental fire of fuel injected in the main injection, which enables suppressing the amount of smoke generated to a minimum, while realizing stable combustion. The amount of smoke generated in this case is an amount S1 indicated in FIG. 11B.

Calculation of ignition delay period

Next, the method of calculation of the ignition delay period performed in step ST2 will be described specifically.

Ignition delay of air-fuel mixture includes physical ignition delay and chemical ignition delay. The physical ignition delay is a period of time required for evaporation/mixture of fuel droplets. On the other hand, the chemical ignition delay is a period of time required for chemical bonding/decomposition and exothermic oxidation of fuel vapor. In the present embodiment, the physical ignition delay period and chemical ignition delay period are each calculated with high accuracy, and a "total ignition delay period" is obtained based on these ignition delay periods.

In the description provided below, the operation of estimating physical ignition delay period, the operation of estimating chemical ignition delay period, and the operation of calculating total ignition delay period will be described in order.

Operation of estimating physical ignition delay period

First, an outline of the operation of estimating physical ignition delay period will be described. The physical ignition delay occurs during a period from a point in time at which a pilot injection is started, until a point in time at which, after the equivalence ratio in spray of fuel injected in that pilot injection (hereinafter referred to as an "in-spray equivalence ratio") has reached a value at which ignition is possible (hereinafter referred to as an "in-spray combustible equivalence ratio"), and the amount of combustible vapor in that spray (hereinafter, referred to as an "amount of in-spray combustible vapor") has reached a value at which ignition is possible (hereinafter referred to as a "minimum necessary amount of combustible vapor") such that ignition has started, the in-spray equivalence ratio has dropped to the in-spray combustible equivalence ratio or less. That is, a period from when the pilot injection is started to when the in-spray equivalence ratio drops to the in-spray combustible equivalence ratio or less is obtained as the physical ignition delay period.

Note that the "amount of in-spray combustible vapor" above-described refers to the volume of the region where the equivalence ratio is higher than the "in-spray combustible equivalence ratio" in fuel spray.

A specific description of this operation of estimating physical ignition delay period will be provided below. FIG. 12 is a flowchart illustrating a procedure of this operation of estimating physical ignition delay period.

First, in step ST11, the in-spray equivalence ratio for each crank angle in the last cycle is extracted. This is performed by extracting the in-spray equivalence ratios that have been calculated for each of the crank angles for a predetermined period after execution of the pilot injection in a cylinder that reached the combustion stroke immediately prior to the cylinder that will subsequently undergo the combustion stroke (for example, a period after start of the pilot injection until start of the main injection), and have been stored in the RAM 103. Note that the in-spray equivalence ratios for each of the crank angles obtained for a predetermined period after execution of the pilot injection at the immediately previous combustion stroke of the cylinder that will subsequently undergo the combustion stroke (at the immediately previous combustion stroke of the same cylinder) may be extracted.

As a specific operation of calculating the in-spray equivalence ratio, the in-spray equivalence ratio is calculated by dividing the amount of fuel in each spray by its volume, and the volume of each spray is calculated by the following Equations (1) to (4) every predetermined crank rotation angle (for example, every 1°CA in terms of the crank rotation angle). The value for the spray volume calculation interval is not limited to this. Equations (1) and (2) are computation formulae for obtaining a spray length $L_{sp}$ of fuel injected in the pilot injection, and are known as "Hiroyasu's equations". Note that Equation (1) is a computation formula for obtaining the spray length $L_{sp}$ for a period until an elapsed time t since the start of fuel injection reaches a droplet breakup time $t_e$, and Equation (2) is a computation formula for obtaining the spray length $L_{sp}$ for a period after the elapsed time t since the start of fuel injection has exceeded the droplet breakup time $t_e$. Also, Equation (3) is a computation formula for obtaining a spray angle $\theta_{sp}$ of fuel injected in the pilot injection. Also, Equation (4) is a computation formula for obtaining a spray volume $V_{sp}$.

$$L_{sp} = \begin{cases} 0.39\left(2\Delta P / \rho_f\right)^{\frac{1}{2}} \cdot t & \left(0 \leq t \leq t_e\right) \cdots (1) \\ 2.95\left(\Delta P / \rho_a\right)^{0.25} \cdot \left(d_0 t\right)^{\frac{1}{2}} & \left(t > t_e\right) \cdots (2) \end{cases}$$

ΔP: Pressure difference between injection pressure and atmosphere pressure
$t_e$: Droplet breakup time
$\rho_f$: Fuel density
$\rho_a$: Atmosphere gas density
$d_0$: injector nozzle diameter

$$\theta_{sp} = 0.05\left(\frac{\rho_a \cdot \Delta P \cdot d_o^{2}}{\mu_a^{2}}\right) \cdots (3)$$

$\mu_a$: Viscosity coefficient of air

$$V_{sp} = 1/3 \, \pi L_{sp}^{3} \tan^2\left(\theta_{sp}\right) \cdots (4)$$

The in-spray equivalence ratio for each crank angle (an equivalence ratio obtained assuming that the in-spray equivalence ratio is uniform) is calculated by dividing the fuel amount in a spray (a fuel amount injected from a single nozzle, that is the amount obtained by dividing the total pilot injection amount by the number of nozzles) by the spray volume $V_{sp}$ calculated for each crank angle in this manner (a volume of fuel injected from a single nozzle), and values obtained in this manner are stored in the RAM 103. In step ST11, data of the in-spray equivalence ratio for each crank angle is extracted.

After the in-spray equivalence ratio for each crank angle obtained in the last cycle has been extracted in this manner, the procedure proceeds to step ST12, and it is determined whether, among these information pieces of in-spray equivalence ratio, there is information whose value exceeds an in-spray combustible equivalence ratio $\varphi_{trg}$. The in-spray combustible equivalence ratio $\varphi_{trg}$ is set such that if the equivalence ratio in a spray of fuel injected in a pilot injection has exceeded the in-spray combustible equivalence ratio $\varphi_{trg}$, ignition of air-fuel mixture of fuel injected in that pilot injection becomes possible, and is set to "0.7", for example. The in-spray combustible equivalence ratio $\varphi_{trg}$ is not limited to this value, and can be experimentally set according to fuel properties (e.g., cetane number), or the like.

FIG. 13 is a diagram illustrating a change in the in-spray equivalence ratio after start of the pilot injection. As shown in FIG. 13, after start of the pilot injection, a fuel spray diffuses within the combustion chamber 3, and fuel droplets present in the spray gradually evaporate. Immediately after injection of fuel, fuel droplets that have not been contributing to the in-spray equivalence ratio evaporate, and accordingly the in-spray equivalence ratio rapidly increases. After that, the in-spray equivalence ratio decreases along with decreasing of the fuel evaporation rate and expansion of the spray volume (diffusion of sprays). Accordingly, the value of the in-spray equivalence ratio is the highest at the timing when the value switches from increasing to decreasing.

The waveform A indicated by the dashed line in FIG. 13 shows an example of change in the in-spray equivalence ratio in the case where no in-spray equivalence ratio obtained for each crank angle in the last cycle exceeds the in-spray combustible equivalence ratio $\varphi_{trg}$. Also, the waveform B indicated by the solid line in FIG. 13B shows an example of change in the in-spray equivalence ratio in the case where any of the in-spray equivalence ratios obtained for each crank in the last cycle exceeds the in-spray combustible equivalence ratio $\varphi_{trg}$.

If any of the in-spray equivalence ratios obtained for each crank in the last cycle exceeds the in-spray combustible

equivalence ratio $\varphi_{trg}$ (see the waveform B in FIG. 13), and the determination result in step ST12 is "YES", then, the procedure proceeds to step ST14.

On the other hand, if all of the in-spray equivalence ratios obtained for each crank in the last cycle are less than or equal to the in-spray combustible equivalence ratio $\varphi_{trg}$ (see the waveform A in FIG. 13), and the determination result in step ST12 is "NO", then, the procedure proceeds to step S13 where an amount increase correction is performed on the pilot injection amount in fuel injection performed in the current cycle. As a specific operation of the amount increase correction of the pilot injection amount, the period of the pilot injection is extended. As an amount of this amount increase correction (a period by which the pilot injection period is extended), the highest value of the in-spray equivalence ratio among the in-spray equivalence ratios obtained for each crank angle in the last cycle (hereinafter referred to as a "maximum in-spray equivalence ratio", which corresponds to "$\varphi_{max}$" in FIG. 13) is compared with the in-spray combustible equivalence ratio $\varphi_{trg}$, and the amount of the amount increase correction is set depending on the deviation therefrom. That is, the greater the deviation (the lower the maximum in-spray equivalence ratio $\varphi_{max}$ is relative to the in-spray combustible equivalence ratio $\varphi_{trg}$), the greater the value set as the amount of the amount increase correction. When amount increase correction is performed on the pilot injection amount in this manner, some of the in-spray equivalence ratios obtained for each crank angle exceed the in-spray combustible equivalence ratio $\varphi_{trg}$ (this results in a change in the in-spray equivalence ratio shown in FIG. 13, for example), and then the determination result in step ST12 is "YES". If such amount increase correction of the pilot injection amount is performed, after the pilot injection and the main injection in step ST1 in the flowchart shown in FIG. 10 have been performed again (after execution of the pilot injection subjected to the amount increase correction and the main injection), the procedure proceeds to the operation of calculating the ignition delay period in step ST2.

In step ST14, an amount of evaporated fuel (amount of in-spray combustible vapor) in the last cycle is extracted. This is performed by extracting an amount of evaporated fuel that has been calculated for a predetermined period after execution of the pilot injection in a cylinder that reached the combustion stroke immediately prior to the cylinder that will subsequently undergo the combustion stroke (for example, a period after start of the pilot injection until start of the main injection), and has been stored in the RAM 103. Note that an amount of evaporated fuel that has been obtained for a predetermined period after execution of the pilot injection at the immediately previous combustion stroke of the cylinder that will subsequently undergo the combustion stroke (at the immediately previous combustion stroke of the same cylinder) may be extracted.

As a specific operation of calculating the amount of evaporated fuel (fuel vapor amount), Equations (5) to (8) indicated below are used for calculation.

Specifically, through experiments of the engine 1 with a performance testing apparatus, a fuel evaporation rate ($dm_v/dt$) is calculated using Equations (5) to (7) indicated below for each crank angle (for example, every advance by 1°CA in the crank angle) of the engine 1 in the combustion stroke.

Alternatively, a steady-state fuel evaporation rate map may be created by mapping the calculated fuel evaporation rates for the crank angles, and the fuel evaporation rate for each crank angle may be calculated by multiplying the steady-state fuel evaporation rate map by correction coefficients according to environmental conditions, operation conditions and the like of the engine 1 (correction coefficients according to the actual or estimated pressure and temperature in a cylinder).

$$\frac{dm_v}{dt} = -2\pi \frac{k}{c_p} D_d \left(1 + 0.23\,\mathrm{Re}^{0.5}\right) \ln\left[1 + \frac{c_p\left(T - T_d\right)}{h_{fg}}\right] \quad \cdots \ (5)$$

$k$:     Thermal conductivity
$c_p$:     Gas specific heat
$D_d$:     Droplet diameter
Re:     Reynolds number
$T$:     Gas specific heat
$T_d$:     Droplet temperature
$h_{fg}$:     Evaporative latent heat

$$\mathrm{Re} = \left(V_{sw}^{\,2} + V_{sq}^{\,2}\right)^{\frac{1}{2}} \times A\,/\,\text{coefficient of kinematic viscosity} \cdots (6)$$

$V_{sw}$:     Swirl velocity
$V_{sq}$:     Squish velocity

*A:* Constant

$$Dd = 72.36 \cdot P_{cr}^{-0.4} \cdot d_0 \quad \cdots (7)$$

$P_{cr}$: Injection pressure (or rail pressure)
$d_0$: Nozzle diameter

The values of the swirl velocity $V_{sw}$ and the squish velocity $V_{sq}$ in the above Equation (6) are determined in accordance with the shape of engine (particularly, the shape of the combustion chamber 3) and the engine speed. Also, the swirl velocity $V_{sw}$ here refers to a swirl velocity in the area inside the combustion chamber 3 near the outer periphery, for example. Also, a constant A is a value determined for each type of the engine 1 through experimentation or the like in advance. Furthermore, the value of the kinematic viscosity coefficient of air-fuel mixture depends on temperature.
Then, the amount of evaporated fuel is calculated by multiplying the calculated evaporation rate for each crank angle by a period tb during which the in-spray equivalence ratio for each crank angle exceeds the combustible equivalence ratio $\varphi_{trg}$ (see the waveform of a change in the in-spray equivalence ratio shown in FIG. 15) (Equation (8)).

$$\text{Current vapor amount } m_{vp} = \frac{dm_v}{dt} \times t_b \cdots (8)$$

In this manner, after the amount of evaporated fuel in the last cycle has been extracted, the procedure proceeds to step ST15, where it is determined whether the amount of evaporated fuel exceeds a minimum necessary amount of combustible vapor M. The minimum necessary amount of combustible vapor M is set to a value with which ignition of air-fuel mixture becomes possible in the case where the amount of in-spray combustible vapor of sprays of fuel injected in the pilot injection exceeds the minimum necessary amount of combustible vapor M, and the value is set using a map, for example. FIG. 14 is a map of minimum necessary amount of combustible vapor referenced when the minimum necessary amount of combustible vapor M is set, and the map is created in advance through experimentation, simulation, or the like, and stored in the ROM 102. The minimum necessary amount of combustible vapor M is obtained by applying, to this map of minimum necessary amount of combustible vapor, a current engine speed and a current fuel injection amount (fuel injection amount in the pilot injection of a cylinder that will subsequently undergo the combustion stroke). The lower the engine speed, or the smaller the fuel injection amount, the smaller the value set as the minimum necessary amount of combustible vapor M.
FIG. 15 is a diagram showing a change in the in-spray equivalence ratio after start of the pilot injection, in which the hatched region corresponds to the amount of in-spray combustible vapor in fuel sprays. If this amount of in-spray combustible vapor exceeds the minimum necessary amount of combustible vapor M and thus the determination result in step ST15 is "YES", the procedure proceeds to step ST17.
In contrast, if this amount of in-spray combustible vapor does not exceed the minimum necessary amount of combustible vapor M and thus the determination result in step ST5 is "NO", the procedure proceeds to step ST16 and the amount increase correction is performed on the pilot injection amount in fuel injection performed in the current cycle. Also in this case, as a specific operation of the amount increase correction of the pilot injection amount, the period of the pilot injection is extended. As an amount of the amount increase correction (a period by which the period of the pilot injection is extended), the calculated amount of in-spray combustible vapor is compared with the minimum necessary amount of combustible vapor M, and the amount of the amount increase correction is set according to the deviation therefrom. That is, the greater the deviation (the smaller an actual amount of in-spray combustible vapor is relative to the minimum necessary amount of combustible vapor M), the greater the value set as the amount of the amount increase correction. When amount increase correction of the pilot injection amount is performed in this manner, the amount of evaporated fuel (amount of in-spray combustible vapor) exceeds the minimum necessary amount of combustible vapor M, and then, the determination result in step ST15 is "YES". Also in the case where such amount increase correction of the pilot injection amount is performed, after the pilot injection and the main injection in step ST1 in the flowchart shown in FIG. 10 are performed again (after execution of the pilot injection subjected to the amount increase correction and the main injection), the procedure proceeds to the operation of calculating the ignition delay period in step ST2.
After achieving, by the operations described above, a state in which some in-spray equivalence ratios obtained for the crank angles in the last cycle exceed the in-spray combustible equivalence ratio $\varphi_{trg}$, and also the amount of evaporated fuel (amount of in-spray combustible vapor) exceeds the minimum necessary amount of combustible vapor M, the procedure proceeds to step ST17, where the physical ignition delay is calculated.
The physical ignition delay is calculated as the sum of a period from start of the pilot injection until the in-spray equivalence ratio reaches the combustible equivalence ratio $\varphi_{trg}$ and a period subsequent thereto until the in-spray equivalence ratio drops to the combustible equivalence ratio $\varphi_{trg}$. For example, in the case of a change in the in-spray equivalence ratio as shown in FIG. 15, a period from start of the pilot injection until the in-spray equivalence ratio reaches the in-spray combustible equivalence ratio $\varphi_{trg}$ corresponds to a period ta in FIG. 15, and a period subsequent thereto until the in-spray equivalence ratio drops to the in-spray combustible equivalence ratio $\varphi_{trg}$ corresponds to a period tb in FIG. 15. The sum of these periods (ta + tb) is calculated as the physical ignition delay period.

More specifically, the physical ignition delay period obtained in the case where the amount increase correction of the pilot injection amount in step ST13 (amount increase correction performed due to no in-spray equivalence ratio obtained for each crank angle exceeding the in-spray combustible equivalence ratio $\varphi_{trg}$) and the amount increase correction of the pilot injection amount in step ST16 (amount increase correction performed due to the amount of in-spray combustible vapor not exceeding the minimum necessary amount of combustible vapor M) are both performed will be described with reference to a change in the in-spray equivalence ratio shown in FIG. 16. First, the in-spray equivalence ratio changes as indicated by the dashed line in FIG. 16 due to the amount increase correction of the pilot injection amount performed in step ST13. In this case, although the physical ignition delay period is the sum of the period ta and the period tb' (ta + tb') in FIG. 16, the amount of in-spray combustible vapor does not exceed the minimum necessary amount of combustible vapor M, and thus ignition is not actually performed. After that, the in-spray equivalence ratio changes as indicated by the solid line in FIG. 16 due to the amount increase correction of the pilot injection amount performed in step ST16. In this case, a period from start of the pilot injection until the in-spray equivalence ratio reaches the in-spray combustible equivalence ratio $\varphi_{trg}$ corresponds to a period ta in FIG. 16, and a period subsequent thereto until the in-spray equivalence ratio drops to the in-spray combustible equivalence ratio $\varphi_{trg}$ corresponds to a period tc in FIG. 16. The sum of the periods (ta + tc) is calculated as the physical ignition delay period. That is, the physical ignition delay period is calculated as a period extended toward the angle of delay side due to the amount increase correction of the pilot injection amount performed in step ST16.

Note that upper limit values are set in advance for the in-spray equivalence ratio and the amount of in-spray combustible vapor that are increased as a result of performing amount increase correction of the pilot injection amount in steps ST13 and ST16. For example, in the case where the in-spray equivalence ratio or the amount of in-spray combustible vapor has reached a corresponding upper limit value due to an increase in the internal temperature of the cylinder, amount decrease correction is performed on the pilot injection amount (amount decrease correction is performed using the in-spray combustible equivalence ratio $\varphi_{trg}$ and the minimum necessary amount of combustible vapor M as lower limit values). In this manner, it is possible to prevent the in-spray equivalence ratio or the amount of in-spray combustible vapor from being excessively increased and causing combustion fluctuation, and at the same time, the amount of fuel consumption can be reduced.

Operation of calculating total ignition delay period

Next, an operation of estimating chemical ignition delay period and an operation of calculating total ignition delay period will be described.

The chemical ignition delay is calculated based on the temperature and pressure inside the combustion chamber 3 at a point in time at which the in-spray equivalence ratio of fuel injected in the pilot injection has reached the in-spray combustible equivalence ratio $\varphi_{trg}$ after start of the pilot injection. Then, the total ignition delay period is calculated from this calculated chemical ignition delay and the physical ignition delay described above.

Specific operations will be described below. FIG. 17 is a flowchart illustrating a procedure of the operation of estimating chemical ignition delay period and the operation of calculating total ignition delay period.

First, in step ST21, the temperature and the pressure inside the combustion chamber at a point in time at which the in-spray equivalence ratio has reached the in-spray combustible equivalence ratio $\varphi_{trg}$ are calculated. Specifically, the temperature and the pressure inside the combustion chamber at a point in time at which has reached the in-spray combustible equivalence ratio $\varphi_{trg}$ (e.g., "0.7") are calculated using Equations (9) to (11) indicated below.

$$T_{equ} = T_o \left( \frac{V_o}{V} \right)^{n-1} \quad \cdots \quad (9)$$

$$P_{equ} = P_o \left( \frac{V_o}{V} \right)^{n} \quad \cdots \quad (10)$$

$$n = f(\text{gas composition, temperature}) \times A\frac{1}{Q} \cdots (11)$$

*To*: Temperature when intake valve is closed
*Vo*: Volume when intake valve is closed
*Po*: Pressure when intake valve is closed
*n*: Polytropic index

Equation (9) is a computation formula for obtaining a temperature $T_{equ}$ inside the combustion chamber at a point in time at which the in-spray equivalence ratio has reached the in-spray combustible equivalence ratio $\varphi_{trg}$, and Equation (10) is a computation formula for obtaining a pressure $P_{equ}$ inside the combustion chamber at a point in time at which the in-spray equivalence ratio has reached the in-spray combustible equivalence ratio $\varphi_{trg}$. Also, "n" in Equations (9) and (10) indicates a polytropic index, which is calculated by Equation (11). The polytropic index n is a function having "gas composition" and "temperature" as variables. Also, "Q" in Equation (11) indicates a fuel injection amount, and "A" indicates an experimentally-obtained correction coefficient.

Note that the method of calculating the temperature and the pressure inside the combustion chamber at a point in time at which the in-spray equivalence ratio has reached the in-spray combustible equivalence ratio $\varphi_{trg}$ is not limited to that described above, and the temperature and the pressure may be obtained using a known gas state equation (PV = nRT).

After the temperature and the pressure inside the combustion chamber at a point in time at which the in-spray equivalence ratio has reached the in-spray combustible equivalence ratio $\varphi_{trg}$ have been calculated in this manner, the procedure proceeds to step ST22, where a chemical ignition delay period $\tau_c$ is calculated with Equation (12) indicated below. Equation (12) is called "Arrhenius equation".

$$\frac{1}{\tau_c} = [O_2]^a [Fuel]^b \exp\left(\frac{-c}{RT}\right) \cdots (12)$$

*a, b, c*: Experimental constants
$[O_2]$: Partial pressure of $O_2$
$[Fuel]$: Partial pressure of fuel
*T*: Temperature
*R*: Gas constant

After the chemical ignition delay period $\tau_c$ has been calculated as described above, the procedure proceeds to step ST23, where the total ignition delay period is calculated. As a specific operation of calculating total ignition delay period, the total ignition delay period is calculated by subtracting a period $\tau_x$ during which the physical ignition delay period $\tau_p$ and the chemical ignition delay period $\tau_c$ are both present from the sum of the physical ignition delay period $\tau_p$ estimated by the operation of estimating physical ignition delay period described above and the chemical ignition delay period $\tau_c$ ($\tau_p + \tau_c - \tau_x$). That is, since there is a period $\tau_x$ during which the physical ignition delay and the chemical ignition delay overlap each other as shown in FIG. 18, the total ignition delay period is calculated by subtracting this overlapping period $\tau_x$ from the sum of the physical ignition delay period $\tau_p$ and the chemical ignition delay period $\tau_c$.

Interval adjusting operation performed in the pilot injection second region Next, the interval adjusting operation performed in the pilot injection second region will be described. In the case where the injection time of the pilot injection is on the angle of advance side of the predetermined time, that is, the interval up to the main injection is longer than the predetermined interval, from among the three factors listed above, the "amount of overlap between spray injected in the pilot injection and spray injected in the main injection" has the greatest influence on the amount of smoke generated, and the degrees of influence of the "main injection amount and injection pressure" and the "ignition delay of fuel injected in the main injection" decrease in this order.

In the case where the injection time of the pilot injection is set within the pilot injection first region in this manner, the amount of smoke generated is greatly influenced by the "amount of overlap between spray injected in the pilot injection and spray injected in the main injection" and fluctuates. Specifically, the greater the "amount of overlap between spray injected in the pilot injection and spray injected in the main injection", the greater the amount of smoke generated. In the relation between the injection time of the pilot injection and the ignition delay period of fuel injected in the main injection shown in FIG. 9A, the cyclic change of the "ignition delay period of fuel injected in the main injection" along with shifting of the injection time of the pilot injection to the angle of delay side is caused by the cyclic change of the "amount of overlap between spray injected in the pilot injection and spray injected in the main injection".

Based on the relation between the injection time of the pilot injection, the amount of overlap between a spray injected in the pilot injection and a spray injected in the main injection, and the amount of smoke generated, in the case where the injection time of the pilot injection is set within the pilot injection second region, the injection time of the pilot injection is determined to be a timing at which the amount of smoke generated is the smallest, in accordance with the "amount of overlap between spray injected in the pilot injection and spray injected in the main injection".

A description of an operational procedure for setting the pilot injection time performed in the case where the injection time of the pilot injection is set within the pilot injection second region will be described.

The outline of this operation performed in the case where the pilot injection time is set in the pilot injection second region is as follows. The injection time of the pilot injection is changed within a preset allowable ignition delay range, and for each changed injection time, the amount of overlap between a spray injected in the pilot injection and a spray injected in the main injection is obtained. Then, the pilot injection time at which the amount of overlap is the smallest in the allowable ignition delay range is determined as the target pilot injection time.

FIG. 19 is a flowchart illustrating an operational procedure for setting the pilot injection time in the pilot injection second region. Also, FIG. 20A shows an example of the relation between the injection time of the pilot injection and the ignition delay period of fuel injected in the main injection in the pilot injection second region, and FIG. 20B shows an example of change in the angle of overlap between a spray injected in the pilot injection and a spray injected in the main injection, the angle of overlap changing in accordance with the injection time of the pilot injection in the pilot injection second region.

In this interval adjusting operation performed in the pilot injection second region, first, the pilot injection is executed at a pilot injection time at which the ignition delay is the greatest within the allowable ignition delay range, and then, the main injection is executed (for example, the main injection is executed at the compression top dead center (TDC)). The method of setting the allowable ignition delay range is the same as that described above. Then, a pilot injection time at which the angle of overlap between a spray injected in the pilot injection and a spray injected in the main injection is the smallest within the allowable ignition delay range is determined as the target pilot injection time.

In FIG. 19, first, in step ST31, the angle of overlap between a spray injected in the pilot injection and a spray injected in the main injection obtained when the pilot injection is executed at the pilot injection time at which the ignition delay is the greatest within the allowable ignition delay range is calculated. This angle of overlap can be calculated with Equation (13) indicated below.

$$\text{Angle of overlap} = \text{Angle between nozzles} - \text{Movement angle} - \theta_{pl}/2 - \theta_m/2 \cdot \cdot \cdot (13)$$

$SR$:                    Swirl ratio in cylinder
$\theta_{pl}$:                    Pilot spray angle
$\theta_m$:                    Main spray angle
Movement angle:    $SR \times \text{interval}/360$

FIG. 21 depicts a schematic plan view showing a state of some of the sprays (sprays injected from two nozzles) in the cylinder when the pilot injection and the main injection are performed, and schematically showing the state of sprays at the end of the main injection. Also, the sprays of fuel injected in the main injection are indicated by the solid lines, and the spray of fuel injected in the pilot injection executed immediately preceding the main injection (pilot spray that is moved due to a swirl flow; a combustion field in the pilot injection) are indicated by the broken lines. In FIG. 21, the sprays of fuel injected in the main injection have a substantially conical shape, whereas the spray injected in the pilot injection executed prior to the main injection has diffused to have a shape of a circular truncated cone.

As shown in FIG. 21, a spray of fuel injected in the pilot injection is moved in the circumferential direction due to a swirl flow, so that part of the spray overlaps a spray that is injected in the main injection performed thereafter (spray injected in the main injection from a nozzle located on the downstream side of the swirl flow). The angle of overlap ($\theta_{overlap}$ in FIG. 21) of the sprays (a spray in the pilot injection and a spray in the main injection) changes depending on the injection interval. This angle of overlap is calculated with Equation (13) indicated above.

In this manner, after the angle of overlap between a spray injected in the pilot injection and a spray injected in the main injection has been calculated, the procedure proceeds to step ST32, and it is determined whether calculation of spray overlap fluctuation for a single cycle has been completed. This spray overlap fluctuation for a single cycle refers to a cyclically-changing fluctuation in the angle of overlap between a spray injected in the pilot injection and a spray injected in the main injection corresponding to a single cycle (fluctuation for a single cycle starting from the spray overlap angle obtained when the pilot injection is executed at a pilot injection time at which the ignition delay is the greatest within the allowable ignition delay range). In FIG. 20, since the range from a timing T6 to a timing T7 corresponds to the spray overlap fluctuation for a single cycle, the spray overlap angle is calculated while changing the injection time of the pilot injection within this range.

Since calculation of the spray overlap fluctuation for a single cycle has not been completed at the start of the interval adjusting operation in the pilot injection second region, the determination result obtained in step ST32 is "NO", and the procedure proceeds to step ST33. In this step ST33, the injection time of the pilot injection is changed. Specifically, the injection time of the pilot injection is changed toward the angle of delay side by the crank angle of 1° with respect to the pilot injection time used in the last calculation (pilot injection time used in the calculation performed in step ST31), and after that, the procedure returns to step ST31.

Then, in step ST31, the angle of overlap between a spray in the pilot injection and a spray in the main injection is calculated using the changed pilot injection time.

If calculation of the spray overlap fluctuation for a single cycle has been completed by repeating the operation described above, the determination result "YES" is obtained in step ST32, and the procedure proceeds to step ST34. In step ST34, the spray overlap angles at each of the pilot injection times that have been calculated in step ST31 are analyzed to determine the injection time of the pilot injection. Specifically, from among the spray overlap angles at the pilot injection times that have been calculated in step ST31, the injection time of the pilot injection at which the spray overlap angle is the smallest (including the case where the spray overlap angle is "0") is extracted. In FIG. 20, a timing T8 is determined as the target pilot injection time. In this manner, robustness is secured against accidental fire of fuel injected in the main injection, which enables suppressing the amount of smoke generated to a minimum, while realizing stable combustion.

As described above, in the present embodiment, with respect to the injection time of the pilot injection, the pilot injection first region where the interval length is decreased and the pilot injection second region where the interval length is increased are set, and if the injection time of the pilot injection is set within the pilot injection first region, the target pilot injection time is determined based on the ignition delay period of fuel injected in the main injection, whereas if the injection time of the pilot injection is set within the pilot injection second region, the target pilot injection time is determined based on the amount of overlap between a spray injected in a pilot injection and a spray injected in the main injection after that pilot injection. That is, different methods are used to determine the target pilot injection time in the case of a region where the amount of smoke generated is greatly influenced by the ignition delay period of fuel injected in the main injection (the pilot injection first region) and the target pilot injection time in the case of a region where the amount of smoke generated is greatly influenced by the amount of overlap between a spray of fuel injected in the pilot injection and a spray of fuel injected in the main injection (the pilot injection second region). In this manner, it becomes possible to determine the target pilot injection time using methods appropriate for the regions, which enables performing stable combustion by adjusting the ignition delay period of fuel injected in the main injection to be within an allowable ignition delay range, and suppressing the amount of smoke generated to a minimum.

Variations

In the embodiments described above, not forming part of the present invention, whether the execution timing of the pilot injection is set in the pilot injection first region or the pilot injection second region is determined in accordance with the engine load and the engine speed. That is, whether the execution timing of the pilot injection is set in the pilot injection first region or the pilot injection second region is determined according to the pilot injection execution region determination map shown in FIG. 8. In the present variation, instead of this, determination of the pilot injection first region and the pilot injection second region is performed according to the degree of premixing of fuel injected in the pilot injection.

Specifically, the determination is performed according to the degree of premixing of fuel injected in the pilot injection during a period between execution of the pilot injection and start of the main injection, while setting the range of the injection period of the pilot injection in which the premixing degree is less than a predetermined amount as a first region, and the range of the injection period of the pilot injection in which the premixing degree is greater than or equal to the predetermined amount as a second region. For example, in the case of an injection pattern in which the pilot injection is executed in a range that is on the angle of delay side of a point 25° before the compression top dead center (BTDC 25°), the first region is selected, and an injection time of the pilot injection at which the ignition delay period of fuel injected in the main injection is in a preset allowable ignition delay range and also the ignition delay period is the longest is determined as the target pilot injection time. On the other hand, in the case of an injection pattern in which the pilot injection is executed in a range that is on the angle of advance side of the point 25° before the compression top dead center (BTDC 25°), the second region is selected, and an injection time of the pilot injection at which the ignition delay period of fuel injected in the main injection is in the preset allowable ignition delay range and also the amount of overlap between a spray of fuel injected in the pilot injection and a spray of fuel injected in the main injection is the smallest is determined as the target pilot injection time.

Also, the injection time of the pilot injection is changed, the ignition delay period when the main injection is executed at each changed injection time is acquired, and determination of the pilot injection first region or the pilot injection second is performed based on the acquired ignition delay period. For example, as shown in FIG. 9A, determination is performed while setting a region where the ignition delay period of fuel injected in the main injection changes at a substantially constant rate as the pilot injection second region, and a region where the ignition delay period of fuel injected in the main injection cyclically changes as the pilot injection first region.

- Other embodiments -

In the embodiments and variation described above, a case was described in which the present invention is applied to an in-line four-cylinder diesel engine mounted in an automobile. The present invention is not limited to use in an automobile, and is applicable also to engines used in other applications. Also, there is no particular limitation with respect to the number of cylinders or the engine type (classified as an in-line engine, V engine, horizontally opposed engine, and so forth).

Also, in the embodiments and variation described above, the region determination for the injection period of the pilot injection, and the operation of setting the injection time in each region are executed in the ECU 100 mounted in a vehicle. The present invention is not limited thereto, and the injection times of the pilot injection may be obtained based on the operation state such as engine load, engine speed, and the like using the methods described above (setting operations illustrated in FIGS. 10 and 19), and a pilot injection time setting map created by mapping the injection times may be stored in the ROM 102, and the target pilot injection time may be determined by reading out the map values.

Also, in the embodiments and variation described above, a case was described in which the execution timing of the main injection is set at the compression top dead center (TDC). However, the present invention is not limited to this, and the execution timing of the main injection may be appropriately set. If the execution timing of the main injection is changed in this manner, the pilot injection first region and the pilot injection second region are also changed accordingly.

In addition, in the embodiments described above, although a description was provided of an engine to which the piezo injector 23, which attains a full valve opening state only when a current is applied thereto and thus changes a fuel injection rate, is applied, the present invention is applicable also to engines to which a variable injection rate injector is applied.

Also, in the embodiments described above, the maniverter 77 is provided with the NSR catalyst 75 and the DPNR catalyst 76, but a maniverter provided with the NSR catalyst 75 and a diesel particulate filter (DPF) may be used as well.

[Industrial Applicability]

The present invention can be applied to interval adjustment for stabilizing combustion and reducing the amount of smoke generated in a common rail in-cylinder direct injection multi-cylinder diesel engine mounted in an automobile.

[Reference Signs List]

1  Engine (internal combustion engine)
23  Injector (fuel injection valve)
3  Combustion chamber

**Claims**

1. A fuel injection control apparatus of a compression self-ignition internal combustion engine (1) capable of executing, as fuel injection from a fuel injection valve (23) toward the inside of a combustion chamber (3), at least main injection and auxiliary injection that is performed prior to the main injection, the fuel injection control apparatus comprising:

    an auxiliary injection time control means that, in a case where the injection time of the auxiliary injection is in a first region whose range is on an angle of delay side of a predetermined injection time, determines, as a target auxiliary injection time, an injection time of the auxiliary injection at which an ignition delay period of fuel injected in the main injection is within a preset allowable ignition delay range and also the ignition delay period is the longest, and in a case where the injection time of the auxiliary injection is in a second region whose range is on an angle of advance side of the first region, determines, as the target auxiliary injection time, an injection time of the auxiliary injection at which the ignition delay period of fuel injected in the main injection is within the preset allowable ignition delay range and also an amount of overlap between a spray of fuel injected in the auxiliary injection and a spray of fuel injected in the main injection is the smallest

wherein the injection time of the auxiliary injection is changed during steady operation or deceleration of the internal combustion engine (1), an ignition delay period when the main injection is executed at each changed injection time is obtained, and whether the injection time of the auxiliary injection is in the first region or the second region is determined based on the obtained ignition delay period, and

wherein the determination is performed while setting a region where the ignition delay period of fuel injected in the main injection changes at a substantially constant rate as the pilot injection second region, and a region where the ignition delay period of fuel injected in the main injection cyclically changes as the pilot injection first region.

2. The fuel injection control apparatus of the internal combustion engine (1) according to claim 1,
wherein the auxiliary injection time control means is configured to, in the case where the injection time of the auxiliary injection is in the first region, determine the target auxiliary injection time while shifting, by an amount corresponding to a single fluctuation cycle of the ignition delay period, the injection time of the auxiliary injection to the angle of delay side from an injection time of the auxiliary injection at which the ignition delay period is the longest among injection times of the auxiliary injection at which the ignition delay period of fuel injected in the main injection is within the preset allowable ignition delay range.

3. The fuel injection control apparatus of the internal combustion engine (1) according to claim 1,
wherein the auxiliary injection time control means is configured to, in the case where the injection time of the auxiliary injection is in the second region, determine the target auxiliary injection time while shifting, by an amount corresponding to a single fluctuation cycle of the amount of overlap between a spray of fuel injected in the auxiliary injection and a spray of fuel injected in the main injection, the injection time of the auxiliary injection to the angle of delay side from an injection time of the auxiliary injection at which the ignition delay period is the longest among injection times of the auxiliary injection at which the ignition delay period of fuel injected in the main injection is within the preset allowable ignition delay range.

4. The fuel injection control apparatus of the internal combustion engine (1) according to claim 1,
wherein the auxiliary injection time control means is configured to, in a case where the injection time of the auxiliary injection is in the first region, obtain an ignition delay period while changing the injection time of the auxiliary injection to the angle of delay side, and in a case where that ignition delay period departs from within the allowable ignition delay range to a side in which the ignition delay period increases, determine, as the target auxiliary injection time, an injection time of the auxiliary injection at which the ignition delay period falls within the allowable ignition delay range after the departing.

**Patentansprüche**

1. Kraftstoffeinspritzsteuervorrichtung einer Kompressionsselbstzündbrennkraftmaschine (1), die in der Lage ist, als eine Kraftstoffeinspritzung von einem Kraftstoffeinspritzventil (23) zu der Innenseite einer Brennkammer (3) hin zumindest eine Haupteinspritzung und eine Hilfseinspritzung auszuführen, die vor der Haupteinspritzung durchgeführt wird, wobei die Kraftstoffeinspritzsteuervorrichtung folgendes aufweist:

eine Hilfseinspritzzeitsteuereinrichtung, die in einem Fall, in dem die Einspritzzeit der Hilfseinspritzung in einem ersten Bereich ist, dessen Bereich auf einer Verzögerungswinkelseite einer vorbestimmten Einspritzzeit ist, als eine Sollhilfseinspritzzeit eine Einspritzzeit der Hilfseinspritzung bestimmt, bei der eine Zündverzögerungsdauer von Kraftstoff, der in der Haupteinspritzung eingespritzt ist, innerhalb eines voreingestellten erlaubten Zündverzögerungsbereichs ist und außerdem die Zündverzögerungszeitdauer die längste ist, und in einem Fall, in dem die Einspritzzeit der Hilfseinspritzung in einem zweiten Bereich ist, dessen Bereich auf einer Vorversatzwinkelseite des ersten Bereich ist, als die Sollhilfseinspritzzeit eine Einspritzzeit der Hilfseinspritzung bestimmt, bei der die Zündverzögerungsdauer von Kraftstoff, der in der Haupteinspritzung eingespritzt wird, innerhalb des voreingestellten erlaubten Zündverzögerungsbereichs ist und außerdem ein Überlappungsbetrag zwischen einem Sprühnebel von Kraftstoff, der in der Hilfseinspritzung eingespritzt wird, und einem Sprühnebel von Kraftstoff, der in der Haupteinspritzung eingespritzt wird, der kleinste ist, wobei die Einspritzzeit der Hilfseinspritzung während eines stetigen Betriebs oder einer Verzögerung der Brennkraftmaschine (1) geändert wird, eine Zündverzögerungsdauer, wenn die Haupteinspritzung ausgeführt wird, bei jeder geänderten Einspritzzeit erlangt wird, und basieren auf der erlangten Zündverzögerungszeitdauer bestimmt wird, ob die Einspritzzeit der Hilfseinspritzung in dem ersten Bereich oder dem zweiten Bereich ist, und wobei die Bestimmung durchgeführt wird, während ein Bereich, in dem die Zündzeitverzögerung von Kraftstoff, der in der Haupteinspritzung eingespritzt wird, sich bei einer im Wesentlichen konstanten Rate ändert, als der zweite Piloteinspritzbereich und ein Bereich, in dem eine Zündverzögerungszeitdauer von Kraftstoff, der in der Haupteinspritzung eingespritzt wird, sich zyklisch ändert, als der erste Piloteinspritzbereich eingestellt wird.

2. Kraftstoffeinspritzsteuervorrichtung der Brennkraftmaschine (1) nach Anspruch 1,
wobei die Hilfseinspritzzeitsteuereinrichtung gestaltet ist, um in dem Fall, in dem die Einspritzzeit der Hilfseinspritzung in dem ersten Bereich ist, die Sollhilfseinspritzzeit zu bestimmen, während die Einspritzzeit der Hilfseinspritzung zu der Verzögerungswinkelseite von einer Einspritzzeit der Hilfseinspritzung, bei der die Zündverzögerungszeitdauer unter Einspritzzeiten der Hilfseinspritzung die längste ist, bei der die Zündverzögerungszeitdauer von Kraftstoff, der in der Haupteinspritzung eingespritzt wird, innerhalb des voreingestellten erlaubten Zündverzögerungsbereichs ist, um einen Betrag versetzt wird, der einem einzelnen Fluktuationszyklus der Zündverzögerungszeitdauer entspricht.

3. Kraftstoffeinspritzsteuervorrichtung der Brennkraftmaschine (1) nach Anspruch 1,
wobei die Hilfseinspritzzeitsteuereinrichtung gestaltet ist, um in dem Fall, in dem die Einspritzzeit der Hilfseinspritzung in dem zweiten Bereich ist, die Sollhilfseinspritzzeit zu bestimmen, während die Einspritzzeit der Hilfseinspritzung auf die Verzögerungswinkelseite von einer Einspritzzeit der Hilfseinspritzung, bei der die Zündverzögerungszeitdauer die längste ist unter Einspritzzeiten der Hilfseinspritzung, bei der die Zündverzögerungszeitdauer von Kraftstoff, der in der Haupteinspritzung eingespritzt wird, innerhalb des voreingestellten erlaubten Zündverzögerungsbereichs ist, um einen Betrag versetzt wird, der einem einzelnen Fluktuationszyklus des Überlappungsbetrags zwischen einem Sprühnebel von Kraftstoff, der in der Hilfseinspritzung eingespritzt wird, und einem Sprühnebel von Kraftstoff, der in der Haupteinspritzung eingespritzt wird, entspricht.

4. Kraftstoffeinspritzsteuervorrichtung der Brennkraftmaschine (1) nach Anspruch 1,
wobei die Hilfseinspritzzeitsteuereinrichtung gestaltet ist, um in einem Fall, in dem die Einspritzzeit der Hilfseinspritzung in dem ersten Bereich ist, eine Zündverzögerungszeitdauer zu erlangen, während die Zündzeit der Hilfseinspritzung zu der Verzögerungswinkelseite hin geändert wird, und in einem Fall, in dem diese Zündverzögerungszeitdauer von innerhalb des erlaubten Zündverzögerungsbereichs zu einer Seite hin abweicht, auf der die Zündverzögerungszeitdauer steigt, als die Sollhilfseinspritzzeit eine Einspritzzeit der Hilfseinspritzung zu bestimmen, bei der die Zündverzögerungszeitdauer innerhalb des erlaubten Zündverzögerungsbereichs nach dem Abweichen fällt.

## Revendications

1. Dispositif de commande d'injection de carburant d'un moteur à combustion interne (1) à autoallumage par compression pouvant exécuter, en tant qu'injection de carburant à partir d'une soupape d'injection de carburant (23) vers l'intérieur d'une chambre de combustion (3), au moins une injection principale et une injection auxiliaire qui est réalisée avant l'injection principale, le dispositif de commande d'injection de carburant comprenant :

un moyen de commande de temps d'injection auxiliaire qui, dans le cas dans lequel le temps d'injection de l'injection auxiliaire est dans une première région dont la plage est sur un angle du côté de retard d'un temps d'injection prédéterminé, détermine, en tant que temps d'injection auxiliaire cible, un temps d'injection de l'injection auxiliaire auquel une période de retard d'allumage du carburant injecté dans l'injection principale est dans une plage de retard admissible prédéterminée et également auquel la période de retard d'allumage est la plus longue, et dans le cas dans lequel le temps d'injection de l'injection auxiliaire est dans une seconde région dont la plage est sur un angle du côté d'avancement de la première région, détermine, en tant que temps d'injection auxiliaire cible, un temps d'injection de l'injection auxiliaire auquel la période de retard d'allumage du carburant injecté dans l'injection principale est dans la plage de retard d'allumage admissible prédéterminée et également auquel une quantité de chevauchement entre un jet de carburant injecté dans l'injection auxiliaire et un jet de carburant injecté dans l'injection principale est la plus petite,
dans lequel le temps d'injection de l'injection auxiliaire est modifié pendant le fonctionnement stable ou la décélération du moteur à combustion interne (1), on obtient une période de retard d'allumage lorsque l'injection principale est réalisée à chaque temps d'injection modifié, et si le temps d'injection de l'injection auxiliaire est dans la première région ou la seconde région est déterminé en fonction de la période de retard d'allumage obtenue, et
dans lequel la détermination est réalisée tout en réglant une région dans laquelle la période de retard d'allumage de carburant injecté dans l'injection principale change à un taux sensiblement constant, comme étant la seconde région d'injection pilote, et une région dans laquelle la période de retard d'allumage de carburant injecté dans l'injection principale change de manière cyclique, comme étant la première région d'injection pilote.

**2.** Dispositif de commande d'injection de carburant du moteur à combustion interne (1) selon la revendication 1, dans lequel le moyen de commande de temps d'injection auxiliaire est configuré pour, dans le cas dans lequel le temps d'injection de l'injection auxiliaire est dans la première région, déterminer le temps d'injection auxiliaire cible tout en décalant, selon une quantité correspondant à un seul cycle de fluctuation de la période de retard d'allumage, le temps d'injection de l'injection auxiliaire vers un angle du côté du retard à partir d'un temps d'injection de l'injection auxiliaire auquel la période de retard d'allumage est la plus longue parmi les temps d'injection de l'injection auxiliaire auxquels la période de retard d'allumage de carburant injecté dans l'injection principale est dans la plage de retard d'allumage admissible prédéterminée.

**3.** Dispositif de commande d'injection de carburant du moteur à combustion interne (1) selon la revendication 1, dans lequel le moyen de commande de temps d'injection auxiliaire est configuré pour, dans le cas dans lequel le temps d'injection de l'injection auxiliaire est dans la seconde région, déterminer, le temps d'injection auxiliaire cible tout en décalant, selon une quantité correspondant à un seul cycle de fluctuation de la quantité de chevauchement entre un jet de carburant injecté dans l'injection auxiliaire et un jet de carburant injecté dans l'injection principale, le temps d'injection de l'injection auxiliaire vers l'angle du côté du retard à partir d'un temps d'injection de l'injection auxiliaire auquel la période de retard d'injection est la plus longue parmi les temps d'injection de l'injection auxiliaire auxquels la période de retard d'injection de carburant injecté dans l'injection principale est dans la plage de retard d'allumage admissible prédéterminée.

**4.** Dispositif de commande d'injection de carburant du moteur à combustion interne (1) selon la revendication 1, dans lequel le moyen de commande de temps d'injection auxiliaire est configuré pour, dans le cas dans lequel le temps d'injection de l'injection auxiliaire est dans la première région, obtenir une période de retard d'allumage tout en modifiant le temps d'injection de l'injection auxiliaire vers l'angle du côté du retard, et un cas dans lequel cette période de retard d'allumage s'éloigne de la plage de retard d'allumage admissible vers un côté dans lequel la période de retard d'allumage augmente, déterminer, en tant que temps d'injection auxiliaire cible, un temps d'injection de l'injection auxiliaire auquel la période de retard d'allumage se trouve dans la plage de retard d'allumage admissible, après l'éloignement.

FIG.1

FIG.2

# FIG.3

100 : ECU

105

40 — Crank position sensor

41 — Rail pressure sensor

42 — Throttle opening degree sensor

43 — Air flow meter

44 — A/F sensor

45 — Exhaust temperature sensor

46 — Water temperature sensor

47 — Accelerator opening degree sensor

48 — Intake pressure sensor

49 — Intake temperature sensor

4A — Outside pressure sensor

4B — Cylinder pressure sensor

Input interface

Backup RAM — 104

RAM — 103

ROM — 102

21 — Supply pump

23 — Injectors

26 — Fuel addition valve

62 — Throttle valve

66 — Swirl control valve

81 — EGR valve

Output interface

CPU — 101

107

106

# FIG.4

Heat generation rate

$\alpha$

Heat generation rate waveform
due to main injection

Heat generation rate waveform
due to pilot injection

$\beta$

TDC

ATDC10°
(Center of gravity of combustion)

Crank angle

Fuel injection rate

Main injection

Pilot injection

TDC

T1

Crank angle

FIG.5

EP 2 522 841 B1

FIG.6

FIG.7

FIG.8

| | Low ← Engine speed → High | | | | | | |
|---|---|---|---|---|---|---|---|
| High ↑ Engine load ↓ Low | 2 | 2 | 2 | 2 | 2 | 2 | 2 |
| | ↑ | ↑ | ↑ | ↑ | ↑ | ↑ | ↑ |
| | ↑ | ↑ | ↑ | ↑ | ↑ | ↑ | ↑ |
| | 1 | 1 | ↑ | ↑ | ↑ | ↑ | ↑ |
| | ↑ | ↑ | 1 | 1 | ↑ | ↑ | ↑ |
| | ↑ | ↑ | ↑ | ↑ | 1 | ↑ | ↑ |

FIG.9A

Large

Main injection ignition delay period

Small

Pilot injection
second region

Pilot injection
first region

Angle of advance

T2

Pilot injection time

Angle of delay

FIG.9B

Large

Amount of smoke generated

Small

Angle of advance

T2

Pilot injection time

Angle of delay

34

FIG.10

```
        ┌──────────────────────────────┐
        │  Injection time setting operation │
        │    in pilot injection first region │
        └──────────────────────────────┘
                      │          ←──────────────( 1 )
                      ▼
ST1 ──┐  ┌──────────────────────────────┐
        │  Execute pilot injection/main injection │
        └──────────────────────────────┘
                      │
                      ▼
ST2 ──┐  ┌──────────────────────────────┐
        │  Calculate ignition delay period of main injection │
        └──────────────────────────────┘
                      │
                      ▼
ST3 ──┐  ╱──────────────────────────────╲      NO              ST4
        ⟨  Calculation of ignition delay fluctuation for  ⟩────────┐      ┐
        ╲    a single cycle completed?            ╱               │      │
          ──────────────────────────────            ▼
                      │  YES                      ┌──────────────┐
                      │                           │  Change pilot │
                      │                           │ injection time │
                      ▼                           └──────────────┘
ST5 ──┐  ┌──────────────────────────────┐               │
        │     Determine pilot injection time    │               ▼
        └──────────────────────────────┘            ( 1 )
                      │
                      ▼
              ┌──────────────┐
              │   E N D       │
              └──────────────┘
```

FIG.11A

FIG.11B

# FIG.12

```
         ┌──────────────────────────────┐
         │  Physical ignition delay period │
         │     estimation operation        │
         └──────────────────────────────┘
                        │
                        ▼
ST11 ┌──────────────────────────────────┐
     │ Extract in-spray equivalence ratio for│
     │    each crank angle in last cycle     │
     └──────────────────────────────────┘
                        │
                        ▼
ST12          In-spray equivalence      NO           ST13
              ratio > φtrg?      ──────────────┐
                   │ YES                        ▼
                   │              ┌──────────────────────────┐
                   │              │  Amount increase correction │
                   ▼              │   of pilot injection amount  │
ST14 ┌──────────────────────┐    └──────────────────────────┘
     │ Extract amount of evaporated│
     │      fuel in last cycle      │
     └──────────────────────┘
                   │
                   ▼
ST15        Amount of evaporated   NO            ST16
              fuel > M?      ──────────────┐
                   │ YES                    ▼
                   │          ┌──────────────────────────┐
                   │          │  Amount increase correction │
                   ▼          │   of pilot injection amount  │
ST17 ┌────────────────────────────────┐ └──────────────────────────┘
     │ Calculate physical ignition delay period│
     └────────────────────────────────┘
                   │
                   ▼
             ┌──────────┐
             │  RETURN   │
             └──────────┘
```

FIG.13

In-spray equivalence ratio

$\phi$ trg

$\phi$ max

B

A

Equivalence ratio after increase
in pilot injection amount

Equivalence ratio before increase
in pilot injection amount

Crank angle

Start of pilot injection

FIG.14

Fuel injection amount

Large

Minimum necessary amount
of combustible vapor M

Small

Engine speed

FIG.15

FIG.16

## FIG.17

```
        ┌─────────────────────────────┐
        │   Total ignition delay period │
        │    calculation operation      │
        └─────────────────────────────┘
                     │
                     ▼
ST21 ┌────────────────────────────────────────────────────────────┐
     │ Calculate temperature and pressure inside combustion chamber when │
     │    in-spray combustible equivalence ratio has been reached    │
     └────────────────────────────────────────────────────────────┘
                     │
                     ▼
ST22 ┌────────────────────────────────────────┐
     │   Calculate chemical ignition delay period │
     └────────────────────────────────────────┘
                     │
                     ▼
ST23 ┌────────────────────────────────────────┐
     │   Calculate total ignition delay period   │
     └────────────────────────────────────────┘
                     │
                     ▼
          ┌─────────────────┐
          │     RETURN       │
          └─────────────────┘
```

## FIG.18

Physical ignition delay period $\tau$ p

Chemical ignition delay period $\tau$ c

Total ignition delay period

In-spray equivalence ratio

$\phi$ trg

$\tau$ x

Start of pilot injection

Crank angle

## FIG.19

```
        ╭─────────────────────────────╮
        │  Injection time setting operation │
        │  in pilot injection second region │
        ╰─────────────────────────────╯
                      │              ◄────────────────  ②
                      ▼
ST31 ──┐  ┌─────────────────────────────┐
       └──│   Calculate spray overlap angle   │
          └─────────────────────────────┘
                      │
                      ▼
ST32 ──┐  ╱─────────────────────────────────────╲   NO              ST33
       └─◄  Calculation of spray overlap angle fluctuation  ├──────────┐      ┐
          ╲   for a single cycle completed?       ╱                    │      │
           ╲─────────────────────────────────────╱                    ▼      ▼
                      │ YES                              ┌──────────────┐
                      │                                  │  Change pilot  │
                      ▼                                  │  injection time │
ST34 ──┐  ┌─────────────────────────────┐              └──────────────┘
       └──│   Determine pilot injection time  │                    │
          └─────────────────────────────┘                    ▼
                      │                                    ②
                      ▼
              ╭──────────╮
              │   END    │
              ╰──────────╯
```

## FIG.20A

## FIG.20B

FIG.21

Spray in pilot injection

$\theta$ overlap

Spray in main injection

23

**EP 2 522 841 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2003314337 A
- JP 2004360572 A
- JP 2004019539 A
- JP H1182139 B